# EUROPEAN PATENT SPECIFICATION

(11) **EP 3 100 569 B1**
(45) Date of publication and mention of the grant of the patent: **20.02.2019**
(21) Application number: 14880815.7
(22) Date of filing: 17.12.2014
(51) Int. Cl.: H04W 76/15, H04W 76/20, H04W 76/27, H04L 5/00, H04W 56/00, H04W 88/06, H04W 88/08, H04W 88/16

(54) **A METHOD BETWEEN TWO ENBS TO AGREE ON RADIO RESOURCE CONFIGURATION FOR A UE WHICH SUPPORTS DUAL CONNECTIVITY BETWEEN THE ENBS**
VERFAHREN ZWISCHEN ZWEI ENBS ZUR ZUSTIMMUNG ZU EINER FUNKRESSOURCENKONFIGURATION FÜR EINE DIE DOPPELKONNEKTIVITÄT ZWISCHEN ENBS UNTERSTÜTZENDE BENUTZEREINHEIT
PROCÉDÉ ENTRE DEUX ENB POUR SE METTRE D'ACCORD SUR UNE CONFIGURATION DE RESSOURCE RADIO POUR UN EU QUI SUPPORTE UNE CONNECTIVITÉ DOUBLE ENTRE LES ENB

(30) Priority: 31.01.2014 US 201461934380 P
(43) Date of publication of application: 07.12.2016
(73) Proprietor: Telefonaktiebolaget LM Ericsson (publ), 164 83 Stockholm (SE)
(72) Inventor: BERGSTRÖM, Mattias, 120 71 Stockholm (SE); SUSITAIVAL, Riikka, 00250 Helsinki (FI); VESELY, Alexander, 8330 Feldbach (AT); WAGER, Stefan, 02360 Espoo (FI)
(74) Representative: Zacco Sweden AB
(86) International application number: PCT/SE2014/051514
(87) International publication number: WO 2015/115959

(56) References cited:
- EP-A1- 2 357 873
- WO-A1-2013/173957
- WO-A1-2014/182229
- WO-A1-2015/008989
- WO-A1-2015/009075
- KR-A- 20140 123 446
- US-A1- 2011 194 533
- SHARP: "Initial radio resource configuration for Dual connectivity", 3GPP DRAFT; R2-133477 SENB INITIAL SETUP, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Ljubljana, Slovenia; 20131007 - 20131011 27 September 2013 (2013-09-27), XP050719060, Retrieved from the Internet: URL:http://www.3gpp.org/ftp/tsg_ran/WG2_RL 2/TSGR2_83bis/Docs/ [retrieved on 2013-09-27]
- ERICSSON ET AL: "Overall procedures for offloading over Xn", 3GPP DRAFT; R2-132715 - OVERALL PROCEDURES FOR OFFLOADING OVER XN, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRAN , vol. RAN WG2, no. Barcelona, Spain; 20130819 - 20130823 10 August 2013 (2013-08-10), XP050718484, Retrieved from the Internet: URL:http://www.3gpp.org/ftp/tsg_ran/WG2_RL 2/TSGR2_83/Docs/ [retrieved on 2013-08-10]
- ERICSSON: "Signalling procedures for dual connectivity", 3GPP DRAFT; R2-134219 - SIGNALLING PROCEDURES FOR DUAL CONNECTIVITY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FR , vol. RAN WG2, no. San Francisco, USA; 20131111 - 20131115 13 November 2013 (2013-11-13), XP050736966, Retrieved from the Internet: URL:http://www.3gpp.org/ftp/Meetings_3GPP_ SYNC/RAN/RAN2/Docs/ [retrieved on 2013-11-13]
- NTT DOCOMO ET AL: "TP to TR 36.842 on SeNB modification and release", 3GPP DRAFT; R2-134620 [84#00] SENB MOD&RELEASE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. San Francisco, USA; 20131111 - 20131115 21 November 2013 (2013-11-21), XP050753689, Retrieved from the Internet: URL:http://www.3gpp.org/ftp/tsg_ran/WG2_RL 2/TSGR2_84/Docs/ [retrieved on 2013-11-21]
- SHARP: 'Initial radio resource configuration for Dual connectivity' 3GPP TSG-RAN WG2#83BIS R2-133477, [Online] 27 September 2013, LJUBLJANA, SLOVENIA;, pages 1 - 4, XP050719060 Retrieved from the Internet: <URL:http://www.3gpp.org/ftp/tsg_ran/WG2_RL 2/TSGR2_83bis/Docs/>
- INTEL CORPORATION: 'Synchronization for RRC reconfiguration' 3GPP TSG-RAN WG2 MEETING #85 R2-140260, [Online] 30 January 2014, PRAGUE, CZECH REPUBLIC, pages 1 - 3, XP050753964 Retrieved from the Internet: <URL:http://www.3gpp.org/ftp/tsg_ran/WG2_RL 2/TSGR2_85/Docs/>

## Description

### Technical field

The present disclosure relates to wireless communication and in particular to Secondary eNB radio resource configuration for dual connectivity.

### Background

In a typical cellular radio system, wireless terminals (also referred to as user equipment unit nodes, UEs, mobile terminals, and/or mobile stations) communicate via a radio access network, RAN, with one or more core networks, which provide access to data networks, such as the Internet, and/or the public-switched telecommunications network, PSTN. The RAN covers a geographical area that is divided into cell areas, with each cell area being served by a radio base station (also referred to as a base station, a RAN node, a "NodeB", and/or enhanced NodeB "eNodeB" or "eNB"). A cell area is a geographical area where radio coverage is provided by the base station equipment at a base station site. The base stations communicate through radio communication channels with wireless terminals within range of the base stations.

Cellular communications system operators have begun offering mobile broadband data services based on, for example, Wideband Code Division Multiple Access, WCDMA, High Speed Packet Access, HSPA, and Long Term Evolution, LTE, wireless technologies. Moreover, fuelled by introduction of new devices designed for data applications, end user performance requirements are steadily increasing. The increased adoption of mobile broadband has resulted in significant growth in traffic handled by high-speed wireless data networks. Accordingly, techniques that allow cellular operators to manage networks more efficiently are desired.

Techniques to improve downlink performance may include 4-branch MIMO, multi-flow communication, multi carrier deployment, etc. Since spectral efficiencies per link may be approaching theoretical limits, next steps may include improving spectral efficiencies per unit area. Further efficiencies for wireless networks may be achieved, for example, by changing a topology of traditional networks to provide increased uniformity of user experiences throughout a cell. Currently, so-called heterogeneous networks are being developed for 3GPP as discussed, for example, in: RP-121436, Study on UMTS Heterogeneous Networks, TSG RAN Meeting # 57, Chicago, USA, 4th-7th September 2012; R1-124512, Initial considerations on Heterogeneous Networks for UMTS, Ericsson , ST-Ericsson, 3GOO TSG RAN WG1 Meeting #70bis, San Diego, CA, USA, 8th-12th October 2012; and R1-124513, Heterogeneous Network Deployment Scenarios, Ericsson , ST-Ericsson, 3GPP TSG-RAN WG1 #70bis, San Diego, CA, USA, 8th-12th October 2012.

A homogeneous network is a network of base stations (also referred to as NodeB's, enhanced NodeB's, or eNBs) in a planned layout, providing communications services for a collection of user terminals (also referred to as user equipment nodes, UEs, and/or wireless terminals) in which all base stations may have similar transmit power levels, antenna patterns, receiver noise floors, and/or backhaul connectivity to the data network. Moreover, all base stations in a homogeneous network may offer unrestricted access to user terminals in the network, and each base station may serve roughly a same number of user terminals. Current cellular wireless communications systems in this category may include, for example, Global System for Mobile communication, GSM, WCDMA, High Speed Downlink Packet Access, HSDPA, LTE, Worldwide Interoperability for Microwave Access, WiMAX, etc.

In a heterogeneous network, low power base stations (also referred to as low power nodes, LPNs, micro nodes, pico nodes, femto nodes, relay nodes, remote radio unit nodes, RRU nodes, small cells, RRUs, etc.) may be deployed along with or as an overlay to planned and/or regularly placed macro base stations. A macro base station, MBS, may thus provide service over a relatively large macro cell area and each LPN may provide service for a respective relatively small LPN cell area within the relatively large macro cell area. Power transmitted by an LPN (e.g. 2 Watts) may be relatively small compared to power transmitted by a macro base station (e.g. 40 Watts for a typical macro base station). An LPN may be deployed, for example, to reduce/eliminate a coverage hole(s) in the coverage provided by the macro base stations, and/or to off-load traffic from macro base stations (e.g., to increase capacity in a high traffic location, also referred to as a hot-spot). Due to the lower transmit power and smaller physical size, an LPN may offer greater flexibility for site acquisition.

In initial discussions among members of the 3^{rd} Generation Partnership Project, 3GPP, regarding the development of Release 12 specifications for LTE, one of the proposed items for study is the possibility of simultaneously serving a User Equipment (UE) from more than one eNB. In the disclosure that follows, this is called "dual connectivity."

There is a need for a procedure between a Master eNB, MeNB, and a Second eNB, SeNB, to agree on UE radio resource configuration. For instance, a procedure is needed to enable the setup, the modification or the handover of a UE bearer for which radio resources are provided by a radio network node (SeNB) that is different from the radio network node (MeNB) that hosts the RRC connection and the connection to the core network.

The MeNB and SeNB roles are defined from a UE point of view. This means that an eNB that acts as a MeNB to one UE may act as SeNB to another UE.

### Summary

The object is to obviate at least some of the problems outlined above. In particular, it is an object to provide a UE, a SeNB and a MeNB as well as respective method performed thereby for modifying a radio resource configuration of the SeNB with respect to the UE, currently being connected to the MeNB, wherein the UE, the SeNB and the MeNB are operable in a wireless communication system, the wireless communication system being adapted to provide for dual connectivity between the UE and the MeNB, and between the UE and the SeNB. These objects and others may be obtained by providing a UE, a SeNB and a MeNB respectively, and a method performed by a UE, a SeNB and a MeNB respectively according to the independent claims attached below.

According to an aspect, a method performed by a UE is provided, the UE being operable in a wireless communication system, the wireless communication system being adapted to provide for dual connectivity between the UE and a MeNB, and between the UE and a SeNB, the method being performed for modifying a radio resource configuration of the SeNB, with respect to the UE, currently being connected to the MeNB. The method comprises receiving, from the MeNB, a SeNB configuration for the radio resource of the SeNB with respect to the UE; and sending a confirmation to the SeNB, confirming the received SeNB configuration. The method further comprises applying the received SeNB configuration for the radio resource configuration of the SeNB, wherein sending the confirmation to the SeNB comprises sending a Medium Access Control, MAC, Control Element, CE, to the SeNB.

According to an aspect, a method performed by a SeNB is provided, the SeNB being operable in a wireless communication system, the wireless communication system being adapted to provide for dual connectivity between a UE and a MeNB, and between the UE and the SeNB, the method being performed for modifying a radio resource configuration of the SeNB with respect to the UE, currently being connected to the MeNB. The method comprises selecting a SeNB configuration for the radio resource of the SeNB with respect to the UE; and sending the SeNB radio resource configuration to the MeNB. The method further comprises receiving from the UE a Medium Access Control, MAC, Control Element, CE, as a confirmation from the UE confirming reception of the sent SeNB configuration; and determining that the UE has taken the SeNB configuration into use.

According to an aspect, a UE operable in a wireless communication system is provided, the wireless communication system being adapted to provide for dual connectivity between the UE and a MeNB, and between the UE and a SeNB, the UE being configured for modifying a radio resource configuration of the SeNB, with respect to the UE, currently being connected to the MeNB. The UE is configured for receiving, from the MeNB, a SeNB configuration for the radio resource of the SeNB with respect to the UE; sending a confirmation to the SeNB by sending a Medium Access Control, MAC, Control Element, CE, to the SeNB confirming the received SeNB configuration; and applying the received SeNB configuration for the radio resource configuration of the SeNB.

According to an aspect, a SeNB operable in a wireless communication system is provided, the wireless communication system being adapted to provide for dual connectivity between a UE and a MeNB, and between the UE and the SeNB, the method being performed for modifying a radio resource configuration of the SeNB with respect to the UE, currently being connected to the MeNB. The SeNB is configured for selecting a SeNB configuration for the radio resource of the SeNB with respect to the UE; sending the SeNB configuration to the MeNB; from the UE a Medium Access Control, MAC, Control Element, CE, as a confirmation from the UE confirming reception of the sent SeNB configuration; and determining that the UE has taken the SeNB configuration into use.

The UE, the SeNB and the respective method performed thereby may have several advantages. For example, it is possible to ensure that evolved Radio Access Bearer, RAB, Quality of Service requirements are fulfilled, while ensuring UE capabilities are not exceeded.

### Brief description of drawings

Embodiments will now be described in more detail in relation to the accompanying drawings, in which:
Figure 1 is a schematic/block diagram illustrating the overall E-UTRAN architecture.
Figure 2 is a block diagram illustrating a functional split between E-UTRAN and the Evolved Packet Core (EPC).
Figure 3 is a schematic diagram illustrating a user plane protocol stack.
Figure 4 is a schematic diagram illustrating a control plane protocol stack.
Figure 5 is a block diagram illustrating user plane and control plane data flows.
Figure 6 is a schematic diagram illustrating a heterogeneous deployment with a higher-power macro node and a lower-power pico node according to some embodiments.
Figure 7 is a schematic diagram illustrating an example heterogeneous deployment where the pico node corresponds to a cell of its own (a "pico cell"). The indices "p" and "m" indicate common signals/channels for the pico and macro cell respectively.
Figure 8 is a schematic diagram illustrating an example heterogeneous deployment where the pico node does not correspond to a cell of its own.
Figure 9 is a schematic diagram illustrating single-frequency network (SFN) operation with identical transmission from macro and pico (low power) nodes to a wireless terminal according to some embodiments.
Figure 10 is a schematic diagram illustrating dual connectivity operation with the UE (wireless terminal) having multiple connections with both the master (macro) and secondary (pico) nodes according to some embodiments.
Figure 11 is a block diagram illustrating a protocol architecture for multiple connectivity according to some embodiments.
Figure 12 is a signal flow diagram illustrating a contention-based random access procedure in LTE.
Figure 13 is a schematic diagram illustrating control plane termination for dual connectivity, according to some embodiments.
Figure 14 is a signal flow diagram illustrating an example procedure for parameter negotiation between a master eNB and a secondary eNB.
Figure 15 illustrates an example of dual connectivity operation with the UE having multiple connections with both the MeNB and SeNB.
Figure 16 illustrates three options for splitting the U-Plane data.
Figure 17 illustrates an example of user plane protocol termination for bearer split option 1.
Figure 18 illustrates an example of a user plane protocol architecture for bearer split option 3.
Figure 19 illustrates an example of combined user plane architecture for 1A and 3C.
Figure 20 illustrates an example of Radio Interface C-plane architecture for dual connectivity.
Figure 21 illustrates an example of, signalling radio bearers, SRB only transported via MeNB.
Figure 22 illustrates an example of a SeNB addition/modification signalling sequence.
Figure 23a is a flowchart of a method performed by a UE for modifying a radio resource configuration of a SeNB with respect to the UE currently being connected to a MeNB_according to an exemplifying embodiment.
Figure 23b is a flowchart of a method performed by a UE for modifying a radio resource configuration of a SeNB with respect to the UE currently being connected to a MeNB_according to yet an exemplifying embodiment.
Figure 23c is a flowchart of a method performed by a UE for modifying a radio resource configuration of a SeNB with respect to the UE currently being connected to a MeNB_according to still an exemplifying embodiment.
Figure 23d is a flowchart of a method performed by a UE for modifying a radio resource configuration of a SeNB with respect to the UE currently being connected to a MeNB_according to an exemplifying embodiment.
Figure 24a is a flowchart of a method performed by a SeNB for modifying a radio resource configuration of the SeNB with respect to a UE, currently being connected to a MeNB according to an exemplifying embodiment.
Figure 24b is a flowchart of a method performed by a SeNB for modifying a radio resource configuration of the SeNB with respect to a UE, currently being connected to a MeNB according to yet an exemplifying embodiment.
Figure 24c is a flowchart of a method performed by a SeNB for modifying a radio resource configuration of the SeNB with respect to a UE, currently being connected to a MeNB according to still an exemplifying embodiment.
Figure 24d is a flowchart of a method performed by a SeNB for modifying a radio resource configuration of the SeNB with respect to a UE, currently being connected to a MeNB according to another exemplifying embodiment.
Figure 25a is a flowchart of a method performed by a MeNB for modifying a radio resource configuration of a SeNB with respect to a UE currently being connected to the MeNB according to an exemplifying embodiment.
Figure 25b is a flowchart of a method performed by a MeNB for modifying a radio resource configuration of a SeNB with respect to a UE currently being connected to the MeNB according to yet an exemplifying embodiment.
Figure 26 is a block diagram of a UE configured for modifying a radio resource configuration of a SeNB with respect to the UE currently being connected to a MeNB_according to an exemplifying embodiment.
Figure 27 is a block diagram of a UE configured for modifying a radio resource configuration of a SeNB with respect to the UE currently being connected to a MeNB according to another exemplifying embodiment.
Figure 28 is a block diagram of a SeNB configured for modifying a radio resource configuration of the SeNB with respect to a UE, currently being connected to a MeNB according to an exemplifying embodiment.
Figure 29 is a block diagram of a SeNB configured for modifying a radio resource configuration of the SeNB with respect to a UE, currently being connected to a MeNB according to yet an exemplifying embodiment.
Figure 30 is a block diagram of a MeNB configured for modifying a radio resource configuration of a SeNB with respect to a UE currently being connected to the MeNB according to an exemplifying embodiment.
Figure 31 is a block diagram of a MeNB configured for modifying a radio resource configuration of a SeNB with respect to a UE currently being connected to the MeNB according to still an exemplifying embodiment.
Figure 32 is a block diagram of an arrangement in a UE configured for modifying a radio resource configuration of a SeNB with respect to the UE currently being connected to a MeNB_according to an exemplifying embodiment.
Figure 33 is a block diagram of an arrangement in a SeNB configured for modifying a radio resource configuration of the SeNB with respect to a UE, currently being connected to a MeNB according to an exemplifying embodiment.
Figure 34 is a block diagram of an arrangement in a MeNB configured for modifying a radio resource configuration of a SeNB with respect to a UE currently being connected to the MeNB according to an exemplifying embodiment.
Figure 35 is a block diagram generally illustrating a wireless terminal or device, e.g. a network node, wireless device, UE, SeNB, MeNB.
Figure 36 is a block diagram generally illustrating a wireless terminal or device, e.g. a network node, wireless device, UE, SeNB, MeNB.

### Detailed description

Briefly described, a UE, a SeNB and a MeNB are provided as well as respective method performed thereby for modifying a radio resource configuration of the SeNB with respect to the UE, currently being connected to the MeNB, wherein the UE, the SeNB and the MeNB are operable in a wireless communication system, the wireless communication system being adapted to provide for dual connectivity between the UE and the MeNB, and between the UE and the SeNB. For example, a first network node, e.g. a MeNB, may set up a connection between a wireless device, UE, and a second network node, e.g. a SeNB. Radio resource configurations of the MeNB and SeNB may be negotiated, e.g. over the X2 interface. The negotiation may allow for configuring the MeNB and SeNB in a manner that may ensure that communications to the wireless device do not exceed the capabilities of the wireless device and that bearer quality of service requirements are met. For example, in some embodiments, a procedure is provided for the UE to confirm the receipt of MeNB and SeNB radio resource configurations negotiated by the MeNB and SeNB during dual connectivity setup.

In this disclosure, the non-limiting terms MeNB and SeNB are used. They refer to any type of network node that serves wireless devices and/or is connected to other network node(s) or network element(s) or any radio node from where the wireless device receives signal(s). Examples of network nodes are Node B, Base Station, BS, Multi-Standard Radio, MSR, node such as MSR BS, eNode B, eNB, network controller, Radio Network Controller, RNC, Base Station Controller, BSC, relay, donor node controlling relay, Base Transceiver Station, BTS, Access Point, AP, transmission points, transmission nodes, Remote Radio Unit, RRU, Remote Radio Head, RRH, nodes in Distributed Antenna System, DAS.

Further in this disclosure, the non-limiting term UE is used. It refers to any type of wireless device that communicates with a radio network node in a cellular or mobile communication system. Examples of a UE are a mobile station, mobile telephone, target device, Device to Device, D2D, machine type UE or UE capable of Machine to Machine, M2M, communication, Personal Digital Assistant, PDA, iPAD, Tablet, mobile terminals, smart phone, Laptop Embedded Equipped, LEE, Laptop Mounted Equipment, LME, USB dongles, vehicles comprising means for communicating with e.g. MeNBs and SeNBs etc.

Particular embodiments will now be described more fully hereinafter with reference to the accompanying drawings, however, other embodiments may include many different forms and should not be construed as limited to the examples set forth herein. Embodiments of the disclosure need not be mutually exclusive, and components described with respect to one embodiment may be used in another embodiment(s).

Embodiments herein relate to a method performed by a UE operable in a wireless communication system, the wireless communication system being adapted to provide for dual connectivity between the UE and a MeNB, and between the UE and a SeNB, the method being performed for modifying a radio resource configuration of the SeNB, with respect to the UE, currently being connected to the MeNB.

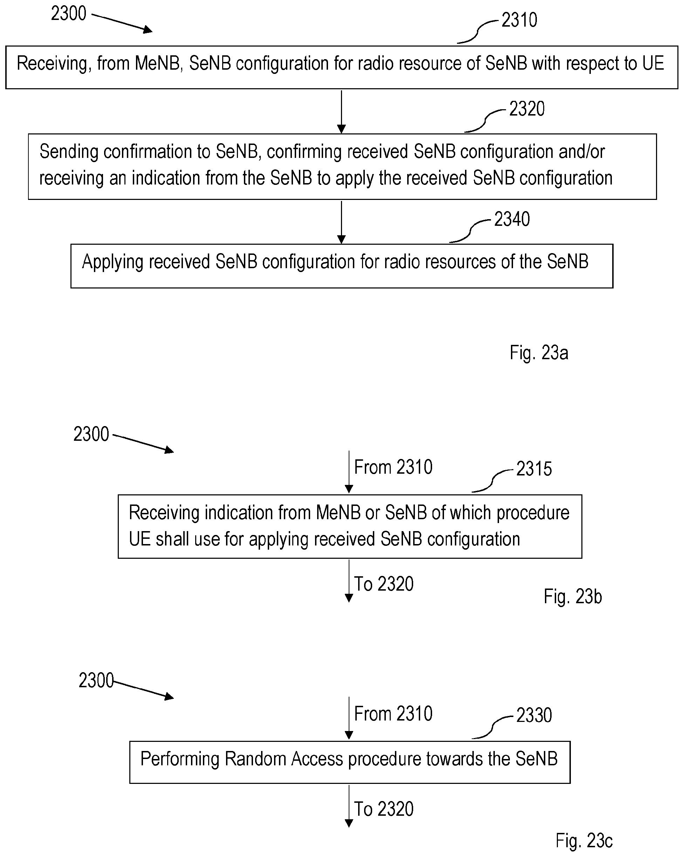

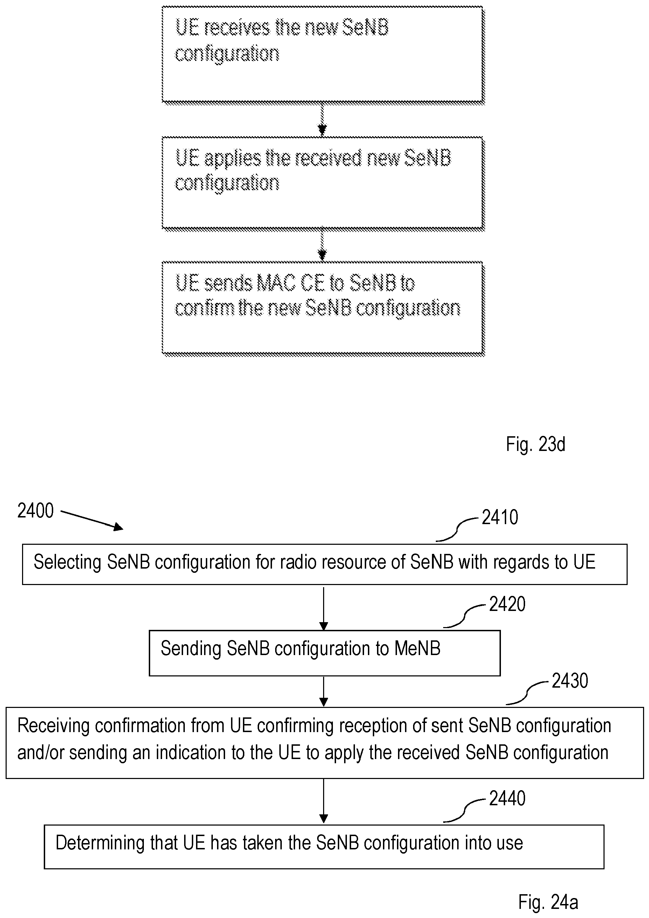

Embodiments of such a method will now be described with reference to **figures 23a-23c****,** which are flowcharts of embodiments of such a method.

**Figure 23a** illustrates the method 2300 comprising receiving 2310, from the MeNB, a SeNB configuration for the radio resource of the SeNB with respect to the UE; and sending 2320 a confirmation to the SeNB, confirming the received SeNB configuration and/or receiving an indication from the SeNB to apply the received SeNB configuration,. The method further comprises applying 2340 the received SeNB configuration for the radio resource configuration of the SeNB.

When the UE receives the SeNB radio resource configuration with respect to itself from the MeNB, the UE may already be using an old SeNB radio resource configuration that is to be replaced by the new one, or there is no previous SeNB radio resource configuration. The SeNB radio resource configuration may be negotiated between the MeNB and the SeNB with regards to the UE capabilities and the Radio Access Bearer, RAB, parameters, e.g. the QoS parameters. This will be described in more detail below.

Irrespective of whether an old SeNB radio resource configuration exists or not, the UE confirms to the SeNB that it has received the SeNB radio resource configuration, by sending a confirmation to the SeNB and/or receives an indication from the SeNB to apply the received SeNB configuration. It may be that the UE should not instantly apply the received SeNB configuration but should wait until the SeNB indicates to the UE that the UE should start applying the received SeNB radio resource configuration. The UE also applies the received SeNB radio resource configuration. As will be discussed in more detail below, the UE may apply the SeNB radio resource configuration already when sending the confirmation of the received SeNB radio resource configuration or at a later time instant following after sending the confirmation of the received SeNB radio resource configuration.

By means of sending the confirmation of the received SeNB radio resource configuration to the SeNB and/or receiving an indication from the SeNB to apply the received SeNB configuration, the SeNB is enabled to deduce when the UE will apply the SeNB radio resource configuration.

The method performed by the UE may have several possible advantages. For example, it is possible to ensure that evolved RAB QoS requirements are fulfilled, while ensuring UE capabilities are not exceeded.

Sending 2320 the confirmation to the SeNB may comprise sending a Medium Access Control, MAC, Control Element, CE, to the SeNB.

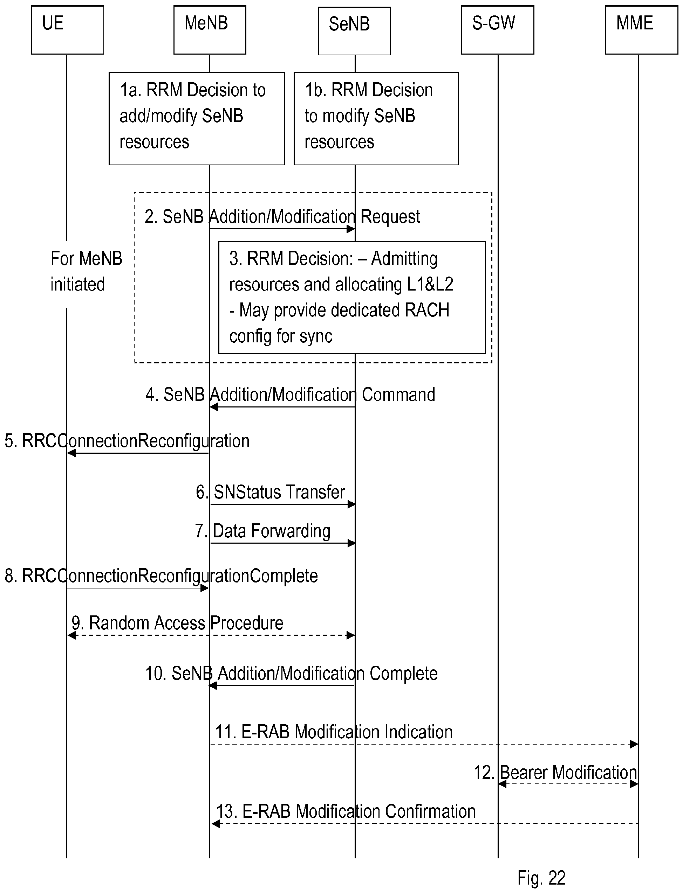

The UE may have different options of sending the confirmation of the SeNB radio resource configuration to the SeNB. Once the SeNB receives the MAC CE comprising the confirmation of the SeNB radio resource configuration, the SeNB may in turn notify the MeNB of successful completion of the reconfiguration, e.g. in step 10 of **figure 22****.**

In some rare cases, random access towards SeNB might not be successful. This can be detected by the MeNB if a complete message is missing, i.e. the SeNB does not notify the MeNB of successful completion. Thus, it may not be necessary to use additional signalling to inform the MeNB when the random access towards SeNB is unsuccessful.

Applying 2340 the received SeNB radio resource configuration may comprise applying the received SeNB configuration for a transmission after the confirmation has been sent.

As stated above, there are different options for when to start applying the received SeNB radio resource configuration. It may be that there is an old existing SeNB radio resource configuration, and it is then possible to confirm the new received SeNB radio resource configuration by means of the old existing SeNB radio resource configuration, wherein the UE may apply the new received SeNB radio resource configuration e.g. at a later transmission from the UE.

The transmission after the confirmation has been sent for which the new received SeNB radio resource configuration is applied may be the first transmission following after the transmission of the confirmation, or a later transmission, as will be described in more detail below.

The option for when the UE starts applying the received SeNB radio resource configuration may be preconfigured such that both the UE and the SeNB knows when the received SeNB radio resource configuration is to be applied by the UE.

Applying 140 the received SeNB configuration comprises applying the received SeNB after a predetermined period of time, T, after the confirmation has been sent.

When the UE sends, or transmits, the confirmation to the SeNB confirming the received SeNB radio resource configuration, the UE may wait the predetermined period of time, T, before it starts applying the received SeNB radio resource configuration. Since the UE knows when it transmits the confirmation, which is correlated to when the SeNB receives the confirmation, both the UE and the SeNB are aware of when the predetermined time T has passed, wherein the UE starts applying the received SeNB radio resource configuration.

Applying 2340 the received SeNB radio resource configuration comprises applying the received SeNB configuration after a predetermined number, N, of transmissions after the confirmation has been performed.

The UE may already have an existing old SeNB radio resource configuration that it uses for communication with, i.e. sending and receiving transmissions to/from, the SeNB. The UE may thus use the old SeNB radio resource configuration for the N number of transmissions to the SeNB before the UE starts applying the new received SeNB radio resource configuration.

Both the UE and the SeNB may count the number of transmissions from the UE to the SeNB, the SeNB counting the number of received transmissions from the UE, and thereby deduce when the UE will apply the new received SeNB radio resource configuration for the first time for a transmission from the UE to the SeNB.

Applying 2340 the received SeNB configuration comprises applying the received SeNB configuration after an indication has been received from the SeNB.

This means that the UE sends, or transmits, the confirmation to the SeNB, but the SeNB is in control of when the UE is to start applying the SeNB radio resource configuration. The UE waits until the SeNB sends an indication to the UE that the UE shall henceforth start applying the new SeNB radio resource configuration.

According to an embodiment, the confirmation is sent according to the received SeNB configuration or an old existing SeNB configuration.

As stated above, the UE may already have an old existing SeNB radio resource configuration that it uses for communication with the SeNB. Once the MeNB and the SeNB has negotiated a new modified SeNB radio resource configuration, the SeNB send the new SeNB radio resource configuration to the UE.

Thus the UE may send the configuration to the SeNB by means of the old existing SeNB radio resource configuration or the new modified SeNB radio resource configuration. Which SeNB radio resource configuration the UE should use for sending the confirmation to the SeNB may be preconfigured so that the UE and the SeNB know which SeNB radio resource configuration is to be used.

The method may further comprise, as illustrated in **figure 23b****,** receiving 2315 an indication from the MeNB or the SeNB of which procedure the UE shall use for applying the received SeNB configuration.

By the indication from the MeNB or the SeNB, the UE is informed how it is to behave and which procedure the UE shall use for applying the received SeNB configuration. In this manner, the SeNB and/or the MeNB may determine which procedure the UE is to use when applying the new SeNB radio resource configuration, wherein the SeNB also knows how and when the UE is to start applying the modified SeNB radio resource configuration.

In this manner, the behaviour of the UE is coordinated with what the SeNB is to expect in relation to when the UE start applying the modified SeNB radio resource configuration.

According to an embodiment, illustrated in **figure 23c****,** the UE is currently not synchronised with the SeNB when receiving 2310 the SeNB configuration for the radio resource configuration of the SeNB, the method comprises performing 2330 a Random Access procedure towards the SeNB.

There may not be an existing old SeNB radio resource configuration between the UE and the SeNB. If this is the case, then the UE is not synchronised with the SeNB. If the UE and the SeNB are not synchronised, they may not communicate properly and thus the UE performs the Random Access procedure towards the SeNB. By performing the Random Access procedure towards the SeNB, the UE becomes connected to the SeNB and synchronised with the SeNB.

Thus if a new RAB is added between the SeNB and the UE as a result of the modified SeNB radio resource configuration, the UE may need to perform a Random Access Procedure in order to achieve uplink synchronisation to the SeNB. In such a scenario, the MAC CE may be carried in the payload of message 3 of the Random Access procedure. The coding and content of the MAC CE may be realised in different ways:
1. The MAC CE can contain only an identifier identifying the UE. The identifier may be a C-RNTI. The C-RNTI could be selected by the SeNB, and included in the SeNB configuration. Alternatively, the C-RNTI could also be selected by the MeNB. The same MAC CE format as used for contention resolution can be reused.
2. In addition to the UE identifier, the MAC CE could also include an identifier of the SeNB configuration. This may avoid possible confusion in the SeNB as to which SeNB configuration the UE has taken into use. The SeNB configuration identifier could for example be a random number of limited number of bits that the SeNB includes in the SeNB configuration, before sending it to the MeNB. When the UE receives the SeNB configuration, it reads the SeNB configuration identifier and includes it in the MAC CE when performing the random access towards the SeNB. For this purpose a new MAC CE format is needed, containing both the UE identifier (e.g. C-RNTI) and the SeNB configuration identifier.

In another scenario, where a SeNB connection is already available to the UE, the UE will have uplink synchronisation and therefore a random access towards the SeNB is not needed to acquire uplink synchronisation. In this case, the MAC CE could be transmitted to the SeNB without the random access.

As described herein, the purpose of the transmission of the MAC CE may be to ensure that the SeNB understands that the UE has applied, or will apply, the new configuration with respect to the SeNB. The MAC CE may address the problem of the SeNB not knowing when the UE receives the configuration message or when the UE applies the configuration (e.g. due to the delay of UE reception of the new SeNB configuration caused by the routing of the configuration message through the MeNB).

The UE may apply the old SeNB configuration when sending the MAC CE to the SeNB. The SeNB can then assume that the UE is using the old configuration up until the time that the SeNB has received the MAC CE from the UE. In some cases it may not be possible that the UE transmits the MAC CE to the SeNB using the new configuration while the SeNB assumes that the UE is using the old configuration (e.g. if the old and the new configuration are different in some particular aspects). Therefore this embodiment ensures that the MAC CE is successfully communicated from the UE to the SeNB.

The UE may then switch to the new configuration in a transmission following the transmission containing the MAC CE. Different alternatives for how long the UE waits to switch to the new configuration after it has sent the MAC CE could include:
- Switching to the new configuration immediately after the MAC CE transmission.
- Waiting to switch to the new configuration for a time T after the MAC CE transmission. The time T may be specified in a specification, configured by the network, etc.
- Switching to the new configuration a number N transmissions after the MAC CE transmission. The number N may be specified in a specification, configured by the network, etc.

For example, the UE may receive the new SeNB configuration from the MeNB, when the UE has decoded the configuration and the UE is ready to apply the new configuration it may send the MAC CE to the SeNB indicating that the new configuration is ready and the UE may then apply the new configuration when performing the next transmission.

In another example, the UE will not switch to the new configuration until the SeNB has sent an indication for the UE to do so (e.g. a MAC CE sent from the SeNB to the UE). The MAC CE sent from the UE to the SeNB may then be seen as an indication to the SeNB that the new configuration has been received by the UE and is ready to be used. In some embodiments, the SeNB may request when the UE should start using the new configuration (e.g. the UE will not start to use the new configuration before the SeNB has requested the UE to do so). For example, the SeNB sends the new configuration to the MeNB, the MeNB sends this new configuration to the UE and the UE will indicate to the SeNB that the new configuration is received. It would then be up to the SeNB to indicate to the UE when the UE shall start to apply the new configuration. The indication from the SeNB to the UE may contain information about when the terminal should start using the new configuration. For example, it may be an indication of a certain number of sub frames after which the UE should use the new configuration, or it may be an indication of a certain number of transmissions after which the UE should use the new configuration, or it may be a timer setting.

It may in some scenarios be possible that the indication from the SeNB to UE, which requests the UE to start using the new configuration, is not preceded by the MAC CE from the UE to the SeNB. Instead the SeNB may be able to determine when the UE has received the new configuration by other means. For example the SeNB may be able to estimate this, based on e.g. backhaul delay, etc. The SeNB may then send the indication which requests the UE to switch to the new configuration at any point in time after which the SeNB expects that the UE has received the new configuration.

The embodiments when the SeNB indicates to the UE that the new configuration should be used may have additional benefits in cases when network situation changes often. For example, if the SeNB creates a new configuration for the UE which gives the UE another carrier to use and this configuration is sent to the MeNB, and shortly after the situation in the SeNB changes such that it is no longer suitable that the UE gets another carrier to use, it would then be possible that the SeNB never indicates to the UE to apply the new configuration. Instead the UE can continue to use the old configuration (which did not have the additional carrier).

In another example the UE may send the MAC CE using the new configuration. This example can be used in cases where the old configuration and the new configuration are such that a transmission from the UE using the new configuration can be understood by the SeNB while using the old configuration. Otherwise the SeNB may need to be prepared to receive transmissions from the UE both with the new configuration and the old configuration.

In case the terminal, e.g. the UE, (and the network, e.g. the SeNB and the MeNB) supports more than one of the above described procedures. It may be so that the network indicates to the terminal which procedure should be applied. In case the new and the old configuration are similar in the sense that it would be possible that the UE uses the new configuration to send the MAC CE then the network may indicate that the UE shall do so. However if the new and old configuration are different in a way such that it is not suitable (or not possible) for the UE to send the MAC CE using the new configuration, then the network may indicate this.

After the SeNB has determined that the UE has started using the new configuration, it can notify the MeNB of the successful completion of the reconfiguration (Step 10 in figure 22). In some rare cases, random access towards SeNB might not be successful. This can be detected by the MeNB if the complete message is missing. Thus, it may not be necessary to use additional signalling to inform the MeNB when the random access towards SeNB is unsuccessful.

In an example, there may further be an indication via the X2 protocol from the SeNB to the MeNB to indicate whether the MeNB should expect a "Complete" message from the SeNB (step 10 in figure 22). The SeNB resource response message over X2 may have an explicit indication to indicate that such a complete message will be transmitted from the SeNB, once the UE has confirmed the SeNB configuration. Alternatively, the presence of the complete message may be detected by the MeNB through the absence/presence of the SeNB configuration in the X2 message.

Thus, in some examples, a procedure is provided for the UE to confirm the receipt of negotiated MeNB and SeNB radio resource configurations during dual connectivity setup. The procedure may help to ensure that eRAB QoS requirements are fulfilled without exceeding the capabilities of the UE. For example, in some embodiments, MeNB and SeNB may need to consider UE device capabilities/limitations when selecting their respective target radio configurations. There may be many different UE limitations that require MeNB and SeNB to have aligned radio resource configurations with respect to the UE capabilities. For example:
- MiMO layer limitation. The UE may be capable of supporting MIMO (Multiple Input, Multiple Output, refers to the use of multiple data streams to the UE via different MIMO layers), but the total number of layers may be limited. This means that SeNB may be dependent upon the number of MIMO layers that MeNB will target.
- Band combination limitation. The UE may support multiple frequency carriers simultaneously (carrier aggregation), but the support may be restricted to certain band combinations. This means that SeNB may be dependent upon the bands that MeNB will target.
- Bitrate limitation. The UE may be restricted in the aggregate bit rate it can support over all bearers. This means that SeNB may be dependent upon the configurations that MeNB will target.
- Random access transmission limitation. The UE may be restricted in that it can only transmit random access to one eNB at the time, which may require that SeNB and MeNB could align the announced random access opportunities.
- Time/frequency resource limitation. For example, a UE may be restricted in that it can only transmit to and/or receive from one eNB at the time. In such cases, the t/f resources may need to be coordinated between MeNB and SeNB.
- Measurement limitations. For example, there may be limitations to how many measurement processes (e.g. to measure different channel state information reference signals, CSI-RS, or measure at resources which serving cell has left intentionally blank, CSI-IM, interference measurement) the UE can handle. This means that MeNB and SeNB may need to coordinate.

Embodiments herein also relate to a method performed by a SeNB, operable in a wireless communication system, the wireless communication system being adapted to provide for dual connectivity between a UE and a MeNB, and between the UE and the SeNB, the method is for modifying a radio resource configuration of the SeNB with respect to the UE, currently being connected to the MeNB.

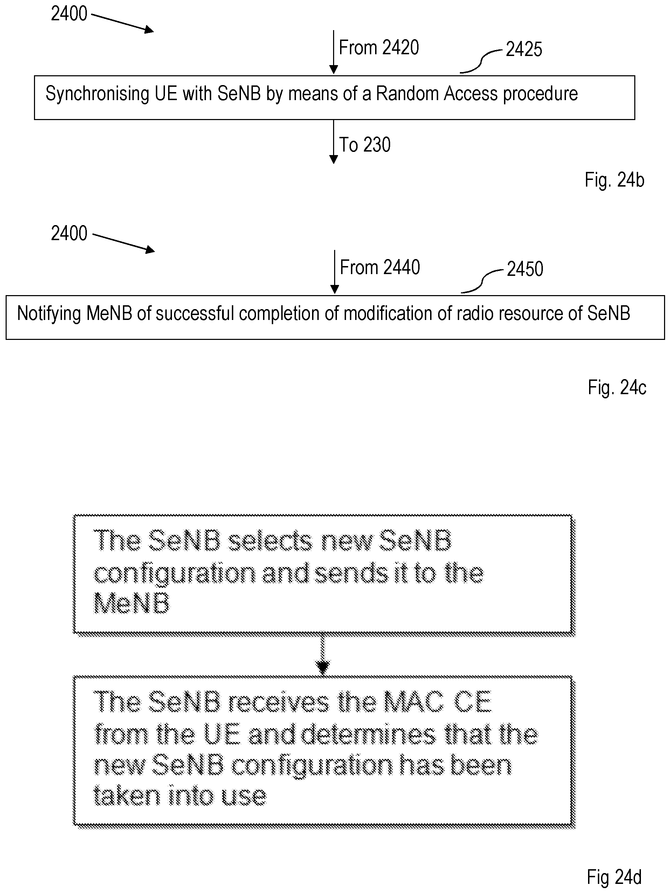

Embodiments of such a method will now be described with reference to **figures 24a-24c****,** which are flowcharts of embodiments of such a method.

**Figure 24a** illustrates the method 2400 comprising selecting 2410 a SeNB configuration for the radio resource of the SeNB with respect to the UE; and sending 2420 the SeNB radio resource configuration to the MeNB. The method 2400 further comprises receiving 2430 a confirmation from the UE confirming reception of the sent SeNB configuration and/or sending an indication to the UE to apply the received SeNB configuration,; and determining 2440 that the UE has taken the SeNB configuration into use.

The MeNB and the SeNB may, as described above, negotiate between themselves in order to the SeNB to select the SeNB radio resource configuration with respect to the UE. The negotiation may comprise taking into account the UE capabilities, the QoS parameters associated with the services used by the UE, which both may affect the RAB, or SeNB radio resource configuration, between the SeNB and the UE. Once the SeNB has selected the SeNB radio resource configuration, the SeNB radio resource configuration to the MeNB. The MeNB may reject or accept the SeNB radio resource configuration, and if the MeNB accepts the SeNB radio resource configuration, the MeNB sends the SeNB radio resource configuration to the UE. The SeNB then receives a confirmation from the UE that the UE has received the selected SeNB radio resource configuration and/or sends an indication to the UE to apply the received SeNB configuration, and may then determine that the UE has taken the SeNB configuration into use.

The method performed by the SeNB has the same possible advantages as the method performed by the UE. For example, it is possible to ensure that evolved RAB QoS requirements are fulfilled, while ensuring UE capabilities are not exceeded.

Determining 2440 that the UE has taken the SeNB configuration into use comprises sending an indication to the UE to start applying the SeNB configuration.

The SeNB receives the confirmation from the UE that the UE has received the selected SeNB radio resource configuration. The SeNB then knows that the UE either is ready to use, is using, or will be using the selected SeNB radio resource configuration. In this embodiment, the SeNB sends an indication to the UE to start applying the SeNB radio resource configuration, wherein the SeNB determines that the UE has taken the SeNB configuration into use.

As described above, it is necessary that the UE and SeNB both are aware of when and how the SeNB radio resource configuration is to be applied in order to communicate properly.

The method may further comprise, as illustrated in **figure 24b****,** when the modification of the radio resource configuration of the SeNB comprises establishment of a new connection between the SeNB and the UE, synchronising 2425 the UE with the SeNB by means of a Random Access Procedure.

As described above, if the UE is not previously synchronised with the SeNB, the UE may initiate and perform a Random Access procedure towards the SeNB in order to obtain e.g. uplink synchronisation and become connected to the SeNB.

The method may still further comprise, as illustrated in **figure 24c****,** notifying 2450 the MeNB of successful completion of the modification of the radio resource configuration of the SeNB.

When the SeNB has determined that the UE is using the SeNB radio resource configuration, it may notify the MeNB of successful completion of the modification of the radio resource configuration of the SeNB.

Generally, it is the MeNB that requests the modification of the SeNB radio resource configuration, which follows by the above described negotiation between the SeNB and the MeNB. Thus, once the modification of the SeNB radio resource configuration is complete, the SeNB may inform the MeNB of this.

It may be that there is a timer in the MeNB that is started once the MeNB has requested the modification of the SeNB radio resource configuration, or once the MeNB sends the modified, or new, SeNB radio resource configuration. If this timer lapses before the MeNB receives a confirmation that the modification of the SeNB radio resource configuration is complete, the MeNB may initiate the procedure anew.

Embodiments herein also relate to a method performed by a MeNB operable in a wireless communication system, the wireless communication system being adapted to provide for dual connectivity between a UE and the MeNB, and between the UE and a SeNB, the method being performed for modifying a radio resource configuration of the SeNB with respect to the UE currently being connected to the MeNB.

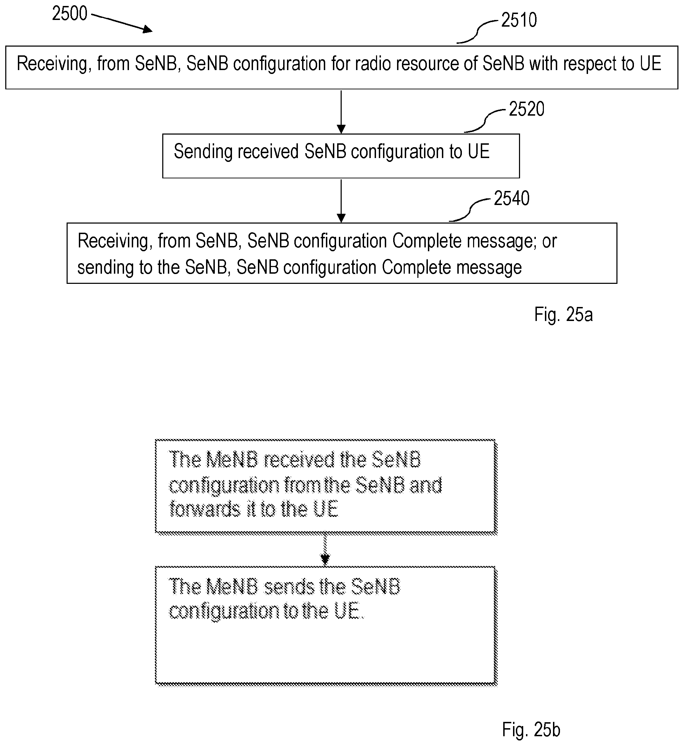

Embodiments of such a method will now be described with reference to **figures 25a-25c****,** which are flowcharts of embodiments of such a method.

**Figure 25a** illustrates the method 2500 comprising receiving 2510, from the SeNB, a SeNB configuration for the radio resource of the SeNB with respect to the UE; sending 2520 the received SeNB configuration to the UE; and receiving or transmitting 2530, from/to the SeNB, a SeNB configuration Complete message.

The MeNB may determine that there is a need for modifying the radio resource configuration of the SeNB. Modification may be either adding a new RAB or eRAB; or modifying an existing RAB or eRAB between the SeNB and the UE. The MeNB thus negotiates with the SeNB, and the SeNB selects the SeNB radio resource configuration and sends it to the MeNB. The MeNB receives it, and may verify that it complies with UE capabilities and QoS associated with the UE or the services the UE is using.

The MeNB may then send the received SeNB radio resource configuration to the UE. The MeNB may also include a MeNB radio resource configuration when sending the SeNB radio resource configuration to the UE.

The MeNB may then transmit the SeNB configuration complete message to the SeNB indicating that the SeNB radio resource configuration has been sent to the UE. Alternatively, or in addition, the MeNB may receive the SeNB configuration complete message from the SeNB once the UE has confirmed the SeNB radio resource configuration to the SeNB.

The method performed by the MeNB has the same possible advantages as the method performed by the UE and the SeNB respectively. For example, it is possible to ensure that evolved RAB QoS requirements are fulfilled, while ensuring UE capabilities are not exceeded.

Embodiments herein Embodiments herein also relate to a UE operable in a wireless communication system, the wireless communication system being adapted to provide for dual connectivity between the UE and a MeNB, and between the UE and a SeNB, the UE being configured for modifying a radio resource configuration of the SeNB, with respect to the UE, currently being connected to the MeNB.

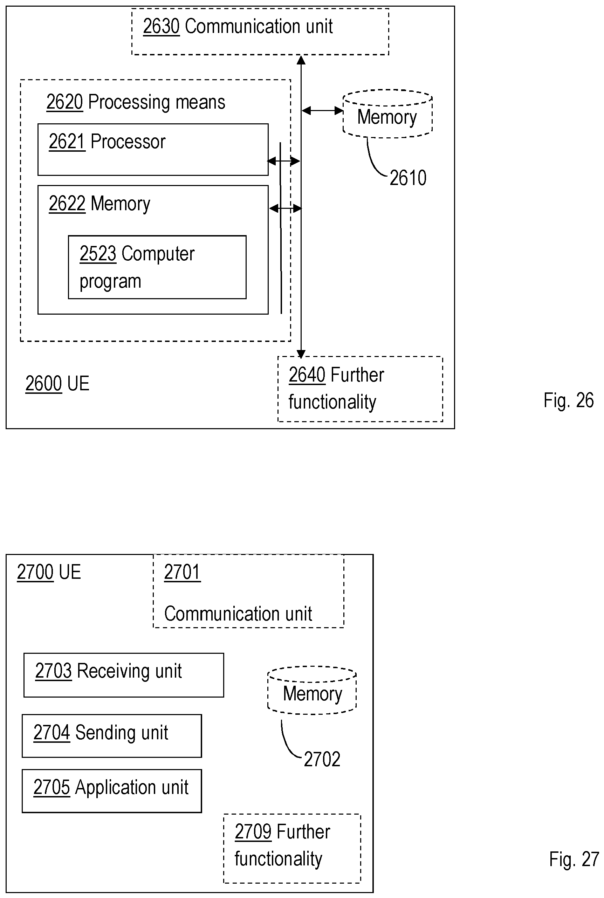

Embodiments of such a UE will now be described with reference to **figures 26** and **27****,** which are block diagrams of embodiments of such a UE. The UE has the same technical features, objects and advantages as the method performed by the UE. The UE will only be described in brief in order to avoid unnecessary repetition.

**Figures 26** and **27** illustrate the UE 2600, 2700 being configured for receiving, from the MeNB, a SeNB configuration for the radio resource of the SeNB with respect to the UE; sending a confirmation to the SeNB, confirming the received SeNB configuration and/or receiving an indication from the SeNB to apply the received SeNB configuration; and applying the received SeNB configuration for the radio resource configuration of the SeNB.

The UE 2600, 2700 may be realised or implemented in various different ways. A first exemplifying implementation is illustrated in **figure 26. Figure 26** illustrate the UE 2600 comprising a processor 2621 and memory 2622, the memory comprising instructions, e.g. by means of a computer program 2623, which when executed by the processor 2621 causes the UE 2600 to send a confirmation to the SeNB, confirm the received SeNB configuration and/or to receive an indication from the SeNB to apply the received SeNB configuration; and to apply the received SeNB configuration for the radio resource configuration of the SeNB.

**Figure 26** also illustrates the UE 2600 comprising a memory 2610. It shall be pointed out that figure 26 is merely an exemplifying illustration and memory 2610 may be optional, be a part of the memory 2622 or be a further memory of the UE. The memory may for example comprise information relating to the UE 2600, to statistics of operation of the UE 2600, just to give a couple of illustrating examples. **Figure 26** further illustrates the UE 2600 comprising processing means 2620, which comprises the memory 2622 and the processor 2621. Still further, figure 26 illustrates the UE 2600 comprising a communication unit 2630. The communication unit 2630 may comprise an interface through which the UE 2600 communicates with other nodes or entities of the communication network. **Figure 26** also illustrates the UE 2600 comprising further functionality 2640. The further functionality 2640 may comprise hardware of software necessary for the UE 2600 to perform different tasks that are not disclosed herein.

An alternative exemplifying implementation of the UE 2600, 2700 is illustrated in **figure 27. Figure 27** illustrates the UE 2700 comprising a receiving unit 2703 for receiving, from the MeNB, a SeNB configuration for the radio resource of the SeNB with respect to the UE and optionally for receiving an indication from the SeNB to apply the received SeNB configuration,. The UE 2700 further comprises a sending unit 2704 for sending a confirmation to the SeNB, confirming the received SeNB configuration; and an application unit 2705 for applying the received SeNB configuration for the radio resource configuration of the SeNB

**In** **figure 27****,** the UE 2700 is also illustrated comprising a communication unit 2701. Through this unit, the UE 2700 is adapted to communicate with other nodes and/or entities in the wireless communication network. The communication unit 2701 may comprise more than one receiving arrangement. For example, the communication unit 2701 may be connected to both a wire and an antenna, by means of which the UE 2700 is enabled to communicate with other nodes and/or entities in the wireless communication network. Similarly, the communication unit 2701 may comprise more than one transmitting arrangement, which in turn is connected to both a wire and an antenna, by means of which the UE 2700 is enabled to communicate with other nodes and/or entities in the wireless communication network. The UE 2700 further comprises a memory 2702 for storing data. Further, the UE 2700 may comprise a control or processing unit (not shown) which in turn is connected to the different units 2703-2704. It shall be pointed out that this is merely an illustrative example and the UE 2700 may comprise more, less or other units or modules which execute the functions of the UE 2700 in the same manner as the units illustrated in figure 27.

It should be noted that **figure 27** merely illustrates various functional units in the UE 2700 in a logical sense. The functions in practice may be implemented using any suitable software and hardware means/circuits etc. Thus, the embodiments are generally not limited to the shown structures of the UE 2700 and the functional units. Hence, the previously described exemplary embodiments may be realised in many ways. For example, one embodiment includes a computer-readable medium having instructions stored thereon that are executable by the control or processing unit for executing the method steps in the UE 2700. The instructions executable by the computing system and stored on the computer-readable medium perform the method steps of the UE 2700 as set forth in the claims.

The UE has the same possible advantages as the method performed by the UE. For example, it is possible to ensure that evolved RAB QoS requirements are fulfilled, while ensuring UE capabilities are not exceeded.

According to an embodiment, the UE 2600, 2700 is configured for sending the confirmation to the SeNB by sending a Medium Access Control, MAC, Control Element, CE, to the SeNB.

According to yet an embodiment, the UE 2600, 2700 is configured for applying the received SeNB configuration by applying the received SeNB configuration for a transmission after the confirmation has been sent.

According to still an embodiment, the UE 2600, 2700 is configured for applying the received SeNB configuration by applying the received SeNB configuration after a predetermined period of time, T, after the confirmation has been sent.

According to another embodiment, the UE 2600, 2700 is configured for applying the received SeNB configuration by applying the received SeNB configuration after a predetermined number, N, of transmissions after the confirmation has been performed.

According to yet an embodiment, the UE 2600, 2700 is configured for applying the received SeNB configuration comprises by the received SeNB configuration after an indication has been received from the SeNB.

According to still an embodiment, the UE 2600, 2700 is configured for sending the confirmation according to the received SeNB configuration or an old existing SeNB configuration.

According to a further embodiment, the UE 2600, 2700 is configured for receiving an indication from the MeNB or the SeNB of which procedure the UE shall use for applying the received SeNB configuration.

According to another embodiment, wherein the UE 2600, 2700 is currently not synchronised with the SeNB when receiving the SeNB configuration for the radio resource configuration of the SeNB, the UE further is configured for performing a Random Access procedure towards the SeNB.

Embodiments herein also relate to a SeNB operable in a wireless communication system, the wireless communication system being adapted to provide for dual connectivity between a UE and a MeNB, and between the UE and the SeNB, the method being performed for modifying a radio resource configuration of the SeNB with respect to the UE, currently being connected to the MeNB.

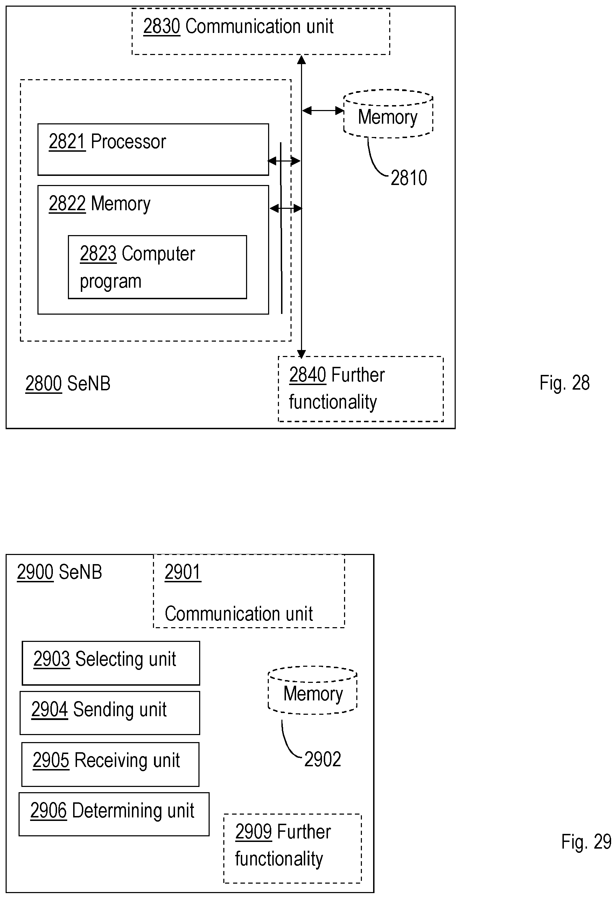

Embodiments of such a SeNB will now be described with reference to **figures 28** and **29****,** which are block diagrams of embodiments of such a SeNB. The SeNB has the same technical features, objects and advantages as the method performed by the SeNB. The SeNB will only be described in brief in order to avoid unnecessary repetition.

**Figures 28** and **29** illustrate the SeNB 2800, 2900 being configured for selecting a SeNB configuration for the radio resource of the SeNB with respect to the UE; sending the SeNB configuration to the MeNB; receiving a confirmation from the UE confirming reception of the sent SeNB configuration and/or sending an indication to the UE to apply the received SeNB configuration; and determining that the UE has taken the SeNB configuration into use.

The SeNB 2800, 2900 may be realised or implemented in various different ways. A first exemplifying implementation is illustrated in **figure 28. Figure 28** illustrate the SeNB 2800 comprising a processor 2821 and memory 2822, the memory comprising instructions, e.g. by means of a computer program 2823, which when executed by the processor 2821 causes the SeNB 2800 to select a SeNB configuration for the radio resource of the SeNB with respect to the UE; to send the SeNB configuration to the MeNB; to receive a confirmation from the UE confirming reception of the sent SeNB configuration and/or to send an indication to the UE to apply the received SeNB configuration; and to determine that the UE has taken the SeNB configuration into use.

**Figure 28** also illustrates the SeNB 2800 comprising a memory 2810. It shall be pointed out that **figure 28** is merely an exemplifying illustration and memory 2810 may be optional, be a part of the memory 2822 or be a further memory of the SeNB. The memory may for example comprise information relating to the SeNB 2800, to statistics of operation of the SeNB 2800, just to give a couple of illustrating examples. **Figure 28** further illustrates the SeNB 2800 comprising processing means 2820, which comprises the memory 2822 and the processor 2821. Still further, **figure 28** illustrates the SeNB 2800 comprising a communication unit 2830. The communication unit 2830 may comprise an interface through which the SeNB 2800 communicates with other nodes or entities of the communication network as well as wireless devices of the communication network. **Figure 28** also illustrates the SeNB 2800 comprising further functionality 2840. The further functionality 2840 may comprise hardware of software necessary for the SeNB 2800 to perform different tasks that are not disclosed herein. Merely as an illustrative example, the further functionality may comprise a scheduler for scheduling transmissions from the SeNB 2800 and/or for transmissions from wireless devices with which the SeNB 2800 communicates with.

An alternative exemplifying implementation of the SeNB 2800, 2900 is illustrated in **figure 29. Figure 29** illustrates the SeNB 2900 comprising a selecting unit 2903 for selecting a SeNB configuration for the radio resource of the SeNB with respect to the UE; and a sending unit 2904 for sending the SeNB configuration to the MeNB and optionally for sending an indication to the UE to apply the received SeNB configuration,. The SeNB 2900 further comprises a receiving unit 2905 for receiving a confirmation from the UE confirming reception of the sent SeNB configuration; and a determining unit 2906 for determining that the UE has taken the SeNB configuration into use.

**In** **figure 29****,** the SeNB 2900 is also illustrated comprising a communication unit 2901. Through this unit, the SeNB 2900 is adapted to communicate with other nodes and/or entities in the wireless communication network. The communication unit 2901 may comprise more than one receiving arrangement. For example, the communication unit 2901 may be connected to both a wire and an antenna, by means of which the SeNB 2900 is enabled to communicate with other nodes and/or entities in the wireless communication network. Similarly, the communication unit 2901 may comprise more than one transmitting arrangement, which in turn is connected to both a wire and an antenna, by means of which the SeNB 2900 is enabled to communicate with other nodes and/or entities in the wireless communication network. The SeNB 2900 further comprises a memory 2902 for storing data. Further, the SeNB 2900 may comprise a control or processing unit (not shown) which in turn is connected to the different units 2903-2906. It shall be pointed out that this is merely an illustrative example and the SeNB 2900 may comprise more, less or other units or modules which execute the functions of the SeNB 2900 in the same manner as the units illustrated in **figure 29****.**

It should be noted that **figure 29** merely illustrates various functional units in the SeNB 2900 in a logical sense. The functions in practice may be implemented using any suitable software and hardware means/circuits etc. Thus, the embodiments are generally not limited to the shown structures of the SeNB 2900 and the functional units. Hence, the previously described exemplary embodiments may be realised in many ways. For example, one embodiment includes a computer-readable medium having instructions stored thereon that are executable by the control or processing unit for executing the method steps in the SeNB 2900. The instructions executable by the computing system and stored on the computer-readable medium perform the method steps of the SeNB 2900 as set forth in the claims.

The SeNB has the same possible advantages as the method performed by the SeNB. One possible advantage is For example, it is possible to ensure that evolved RAB QoS requirements are fulfilled, while ensuring UE capabilities are not exceeded.

The SeNB 2800, 2900 may further be configured for determining that the UE has taken the SeNB configuration into use by sending an indication to the UE to start applying the SeNB configuration.

The SeNB 2800, 2900 may yet further be configured for, when the modification of the radio resource configuration of the SeNB comprises establishment of a new connection between the SeNB and the UE, synchronising the UE with the SeNB by means of a Random Access Procedure.

The SeNB 2800, 2900 may still further be configured for notifying the MeNB of successful completion of the modification of the radio resource configuration of the SeNB.

Embodiments herein also relate to a MeNB operable in a wireless communication system, the wireless communication system being adapted to provide for dual connectivity between a User Equipment, UE, and the MeNB, and between the UE and a Secondary eNB, SeNB, the method being performed for modifying a radio resource configuration of the SeNB with respect to the UE, currently being connected to the MeNB.

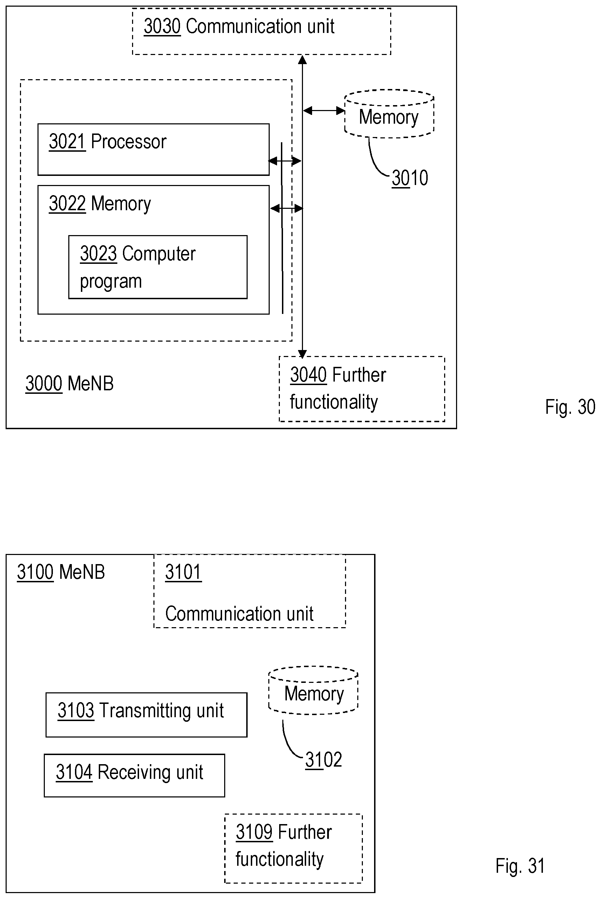

Embodiments of such a MeNB will now be described with reference to **figures 30** and **31****,** which are block diagrams of embodiments of such a MeNB. The MeNB has the same technical features, objects and advantages as the method performed by the MeNB. The MeNB will only be described in brief in order to avoid unnecessary repetition.

**Figures 30** and **31** illustrate the MeNB 3000, 3100 being configured for receiving, from the SeNB, a SeNB configuration for the radio resource of the SeNB with respect to the UE; sending the received SeNB configuration to the UE; and receiving or transmitting, from/to the SeNB, a SeNB configuration complete message.

The MeNB 3000, 3100 may be realised or implemented in various different ways. A first exemplifying implementation is illustrated in **figure 30. Figure 30** illustrate the MeNB 3000 comprising a processor 3021 and memory 3022, the memory comprising instructions, e.g. by means of a computer program 3023, which when executed by the processor 3021 causes the MeNB 3000 to receive, from the SeNB, a SeNB configuration for the radio resource of the SeNB with respect to the UE; to send the received SeNB configuration to the UE; and to receive or transmit, from/to the SeNB, a SeNB configuration complete message.

**Figure 30** also illustrates the MeNB 3000 comprising a memory 3010. It shall be pointed out that figure 30 is merely an exemplifying illustration and memory 3010 may be optional, be a part of the memory 3022 or be a further memory of the MeNB. The memory may for example comprise information relating to the MeNB 3000, to statistics of operation of the MeNB 3000, just to give a couple of illustrating examples. **Figure 30** further illustrates the MeNB 3000 comprising processing means 3020, which comprises the memory 3022 and the processor 3021. Still further, figure 30 illustrates the MeNB 3000 comprising a communication unit 3030. The communication unit 3030 may comprise an interface through which the MeNB 3000 communicates with other nodes or entities of the communication network as well as wireless devices of the communication network. **Figure 30** also illustrates the MeNB 3000 comprising further functionality 3040. The further functionality 3040 may comprise hardware of software necessary for the MeNB 3000 to perform different tasks that are not disclosed herein. Merely as an illustrative example, the further functionality may comprise a scheduler for scheduling transmissions from the MeNB 3000 and/or for transmissions from wireless devices with which the MeNB 3000 communicates with.

An alternative exemplifying implementation of the MeNB is illustrated in **figure 31. Figure 31** illustrates the MeNB 3100 comprising a receiving unit 3103 for receiving, from the SeNB, a SeNB configuration for the radio resource of the SeNB with respect to the UE; a sending unit 3104 for sending the received SeNB configuration to the UE; wherein the receiving unit 3103 and the sending unit 3104 also are for receiving or transmitting, from/to the SeNB, a SeNB configuration complete message

**In** **figure 31****,** the MeNB 3100 is also illustrated comprising a communication unit 3101. Through this unit, the MeNB 3100 is adapted to communicate with other nodes and/or entities in the wireless communication network. The communication unit 3101 may comprise more than one receiving arrangement. For example, the communication unit 3101 may be connected to both a wire and an antenna, by means of which the MeNB 3100 is enabled to communicate with other nodes and/or entities in the wireless communication network. Similarly, the communication unit 3101 may comprise more than one transmitting arrangement, which in turn is connected to both a wire and an antenna, by means of which the MeNB 3100 is enabled to communicate with other nodes and/or entities in the wireless communication network. The MeNB 3100 further comprises a memory 3102 for storing data. Further, the MeNB 3100 may comprise a control or processing unit (not shown) which in turn is connected to the different units 3103-3104. It shall be pointed out that this is merely an illustrative example and the MeNB 3100 may comprise more, less or other units or modules which execute the functions of the MeNB 3100 in the same manner as the units illustrated in figure 31.

It should be noted that **figure 31** merely illustrates various functional units in the MeNB 3100 in a logical sense. The functions in practice may be implemented using any suitable software and hardware means/circuits etc. Thus, the embodiments are generally not limited to the shown structures of the MeNB 3100 and the functional units. Hence, the previously described exemplary embodiments may be realised in many ways. For example, one embodiment includes a computer-readable medium having instructions stored thereon that are executable by the control or processing unit for executing the method steps in the MeNB 3100. The instructions executable by the computing system and stored on the computer-readable medium perform the method steps of the MeNB 3100 as set forth in the claims.

The MeNB has the same possible advantages as the method performed by the MeNB. One possible advantage is For example, it is possible to ensure that evolved RAB QoS requirements are fulfilled, while ensuring UE capabilities are not exceeded.

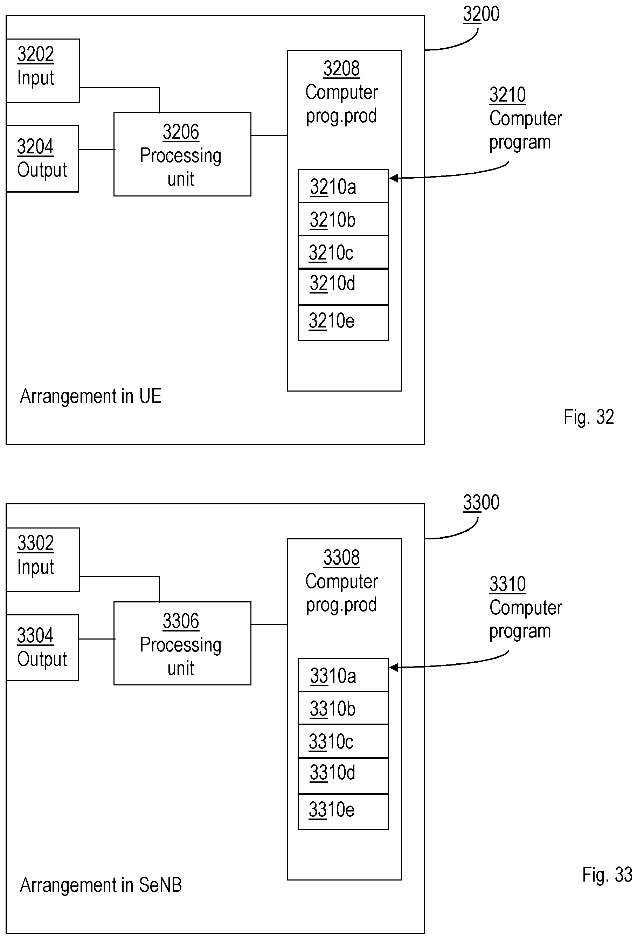

**Figure 32** schematically shows an embodiment of an arrangement 3200 in a UE. Comprised in the arrangement 3200 in the UE are here a processing unit 3206, e.g. with a Digital Signal Processor, DSP. The processing unit 3206 may be a single unit or a plurality of units to perform different actions of procedures described herein. The arrangement 3200 in the UE may also comprise an input unit 3202 for receiving signals from other entities, and an output unit 3204 for providing signal(s) to other entities. The input unit and the output unit may be arranged as an integrated entity or as illustrated in the example of **figure 27****,** as one or more interfaces 2701.

Furthermore, the arrangement 3200 in the UE comprises at least one computer program product 3208 in the form of a non-volatile memory, e.g. an Electrically Erasable Programmable Read-Only Memory, EEPROM, a flash memory and a hard drive. The computer program product 3208 comprises a computer program 3210, which comprises code means, which when executed in the processing unit 3206 in the arrangement 3200 in the UE causes the UE to perform the actions e.g. of the procedure described earlier in conjunction with **figures 23a-23d****.**

The computer program 3210 may be configured as a computer program code structured in computer program modules 3210a-3210e. Hence, in an exemplifying embodiment, the code means in the computer program of the arrangement 3200 in the UE comprises a receiving unit, or module, for receiving, from the MeNB, a SeNB configuration for the radio resource of the SeNB with respect to the UE. The computer program further comprises a sending unit, or module, for sending a confirmation to the SeNB, confirming the received SeNB configuration; and an application unit, or module for applying the received SeNB configuration for the radio resource configuration of the SeNB.

The computer program modules could essentially perform the actions of the flow illustrated in **figures 23a-23d****,** to emulate the UE 2700. In other words, when the different computer program modules are executed in the processing unit 3206, they may correspond to the units 2703-2705 of **figure 27****.**

**Figure 33** schematically shows an embodiment of an arrangement 3300 in a SeNB. Comprised in the arrangement 3300 in the SeNB are here a processing unit 3206, e.g. DSP. The processing unit 3306 may be a single unit or a plurality of units to perform different actions of procedures described herein. The arrangement 3300 in the SeNB may also comprise an input unit 3302 for receiving signals from other entities, and an output unit 3304 for providing signal(s) to other entities. The input unit and the output unit may be arranged as an integrated entity or as illustrated in the example of **figure 29****,** as one or more interfaces 2901.

Furthermore, the arrangement 3300 in the SeNB comprises at least one computer program product 3308 in the form of a non-volatile memory, e.g. an EEPROM, a flash memory and a hard drive. The computer program product 3308 comprises a computer program 3310, which comprises code means, which when executed in the processing unit 3306 in the arrangement 3300 in the SeNB causes the SeNB to perform the actions e.g. of the procedure described earlier in conjunction with **figures 24a-24d****.**

The computer program 3310 may be configured as a computer program code structured in computer program modules 3310a-3310e. Hence, in an exemplifying embodiment, the code means in the computer program of the arrangement 3300 in the SeNB comprises a selecting unit, or module, for selecting a SeNB configuration for the radio resource of the SeNB with respect to the UE; and a sending unit, or module, for sending the SeNB configuration to the MeNB. The computer program further comprises a receiving unit, or module, for receiving a confirmation from the UE confirming reception of the sent SeNB configuration; and a determining unit, or module, for determining that the UE has taken the SeNB configuration into use.

The computer program modules could essentially perform the actions of the flow illustrated in **figures 24a-24d****,** to emulate the SeNB 2900. In other words, when the different computer program modules are executed in the processing unit 3306, they may correspond to the units 2903-2906 of **figure 29****.**

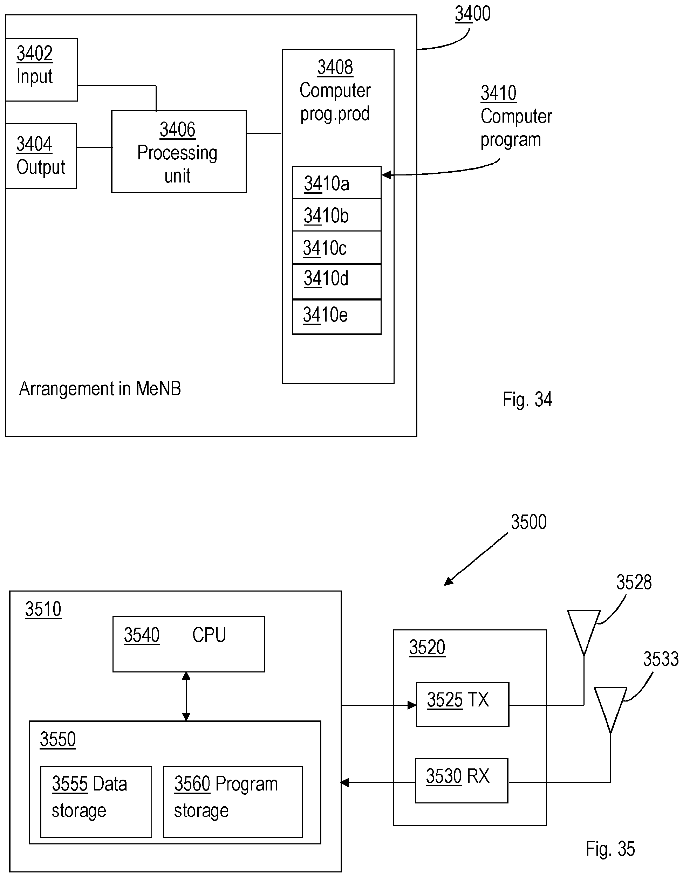

**Figure 34** schematically shows an embodiment of an arrangement 3400 in a MeNB. Comprised in the arrangement 3400 in the MeNB are here a processing unit 3406, e.g. DSP. The processing unit 3406 may be a single unit or a plurality of units to perform different actions of procedures described herein. The arrangement 3400 in the MeNB may also comprise an input unit 3402 for receiving signals from other entities, and an output unit 3404 for providing signal(s) to other entities. The input unit and the output unit may be arranged as an integrated entity or as illustrated in the example of **figure 31****,** as one or more interfaces 3101.

Furthermore, the arrangement 3400 in the MeNB comprises at least one computer program product 3408 in the form of a non-volatile memory, e.g. an EEPROM, a flash memory and a hard drive. The computer program product 3408 comprises a computer program 3410, which comprises code means, which when executed in the processing unit 3406 in the arrangement 3400 in the MeNB causes the MeNB to perform the actions e.g. of the procedure described earlier in conjunction with **figures 25a-25b****.**

The computer program 3410 may be configured as a computer program code structured in computer program modules 3410a-3410e. Hence, in an exemplifying embodiment, the code means in the computer program of the arrangement 3400 in the MeNB comprises a receiving unit, or module, for receiving, from the SeNB, a SeNB configuration for the radio resource of the SeNB with respect to the UE. The computer program further comprises a sending unit, or module, for sending the received SeNB configuration to the UE, wherein the receiving and sending units, or modules, also are for receiving or transmitting, from/to the SeNB, a SeNB configuration complete message.

The computer program modules could essentially perform the actions of the flow illustrated in **figures 25a-25b****,** to emulate the MeNB 3100. In other words, when the different computer program modules are executed in the processing unit 3406, they may correspond to the units 3103-3104 of **figure 31****.**

Although the code means in the respective embodiments disclosed above in conjunction with **figures 27****,** **29** and **31** are implemented as computer program modules which when executed in the respective processing unit causes the UE, the SeNB and the MeNB respectively to perform the actions described above in the conjunction with figures mentioned above, at least one of the code means may in alternative embodiments be implemented at least partly as hardware circuits.

The processor may be a single Central Processing Unit, CPU, but could also comprise two or more processing units. For example, the processor may include general purpose microprocessors; instruction set processors and/or related chips sets and/or special purpose microprocessors such as Application Specific Integrated Circuits, ASICs. The processor may also comprise board memory for caching purposes. The computer program may be carried by a computer program product connected to the processor. The computer program product may comprise a computer readable medium on which the computer program is stored. For example, the computer program product may be a flash memory, a Random-Access Memory RAM, Read-Only Memory, ROM, or an EEPROM, and the computer program modules described above could in alternative embodiments be distributed on different computer program products in the form of memories within the UE, the SeNB, and the MeNB respectively.

It is to be understood that the choice of interacting units, as well as the naming of the units within this disclosure are only for exemplifying purpose, and nodes suitable to execute any of the methods described above may be configured in a plurality of alternative ways in order to be able to execute the suggested procedure actions.

It should also be noted that the units described in this disclosure are to be regarded as logical entities and not with necessity as separate physical entities.

For purposes of illustration and explanation only, particular embodiments are described in the context of operating in a RAN that communicates over radio communication channels with UEs. It will be understood, however, any suitable type of communication network could be used. As used herein, a wireless terminal or UE may include any device that receives data from a communication network, and may include, but is not limited to, a mobile telephone ("cellular" telephone), laptop/portable computer, pocket computer, hand-held computer, desktop computer, a machine to machine (M2M) or MTC type device, a sensor with a wireless communication interface, etc.

In some embodiments of a RAN, several base stations may be connected (e.g. by landlines or radio channels) to a radio network controller, RNC. A radio network controller, also sometimes termed a base station controller, BSC, may supervise and coordinate various activities of the plural base stations connected thereto. A radio network controller may be connected to one or more core networks. According to some other embodiments of a RAN, base stations may be connected to one or more core networks without a separate RNC(s) there between, for example, with functionality of an RNC implemented at base stations and/or core networks.

The Universal Mobile Telecommunications System, UMTS, is a third generation mobile communication system, which evolved from GSM, and is intended to provide improved mobile communication services based on WCDMA technology. UTRAN, short for UMTS Terrestrial Radio Access Network, is a collective term for the Node B's and Radio Network Controllers which make up the UMTS radio access network. Thus, UTRAN is essentially a radio access network using wideband code division multiple access for UEs.

The Third Generation Partnership Project, 3GPP, has undertaken to further evolve the UTRAN and GSM based radio access network technologies. In this regard, specifications for the Evolved Universal Terrestrial Radio Access Network, E-UTRAN, are ongoing within 3GPP. The E-UTRAN comprises the LTE and System Architecture Evolution, SAE.

Note that although certain terminology from 3GPP LTE is used in some example embodiments described above, this should not be seen as limiting. Other wireless systems, such as WCDMA, HSPA, WiMAX, Ultra Mobile Broadband, UMB, HSDPA, GSM etc. may be used in other embodiments.

Also note that terminology such as base station (also referred to as NodeB, eNodeB, or Evolved Node B) and wireless terminal (also referred to as User Equipment node or UE) should be considering non-limiting and does not imply a certain hierarchical relation between the two. In general, a base station (e.g. a "NodeB" or "eNodeB") and a wireless terminal (e.g. a "UE") may be considered as examples of respective different communications devices that communicate with each other over a wireless radio channel. While embodiments discussed herein may focus on wireless transmissions in a downlink from a NodeB to a UE, embodiments of the disclosed concepts may also be applied, for example, in an uplink. Furthermore, although the description above focuses, for purposes of illustration, on example embodiments in which described solutions are applied in heterogeneous networks that include a mix of relatively higher-power (e.g. "macro") base stations and relatively lower-power node (e.g. "pico") base stations, the described techniques may be applied in any suitable type of network, including both homogeneous and heterogeneous configurations. Thus, the base stations involved in the described configurations may be similar or identical to one another, or may differ in terms of transmission power, number of transmitter-receiver antennas, processing power, receiver and transmitter characteristics, and/or any other functional or physical capability.

With the proliferation of user friendly smart phones and tablets, the usage of high data rate services such as video streaming over the mobile network is becoming commonplace, greatly increasing the amount of traffic in mobile networks. Thus, there is a great urgency in the mobile network community to ensure that the capacity of mobile networks keeps up increasing with this ever-increasing user demand. The latest systems such as LTE, especially when coupled with interference mitigation techniques, have spectral efficiencies very close to the theoretical Shannon limit. The continuous upgrading of current networks to support the latest technologies and densifying the number of base stations per unit area are two of the most widely used approaches to meet the increasing traffic demands.

Yet another approach that is gaining high attention is to use Heterogeneous Networks where the traditional pre-planned macro base stations (known as the macro layer) are complemented with several low-powered base stations that may be deployed in a relatively unplanned manner. The 3GPP has incorporated the concept of Heterogeneous Networks as one of the core items of study in the latest enhancements of LTE, such as LTE release 11, and several low-powered base stations to realise heterogeneous networks such as pico base stations, femto base stations (also known as home base stations or HeNBs), relays, and Remote Radio Heads, RRHs, have been defined.

Initial discussions for LTE release 12 have begun, and one of the proposed items for study is the possibility of serving a UE from more than one eNB simultaneously. The current legacy handover mechanisms of LTE may have to be updated to support this.

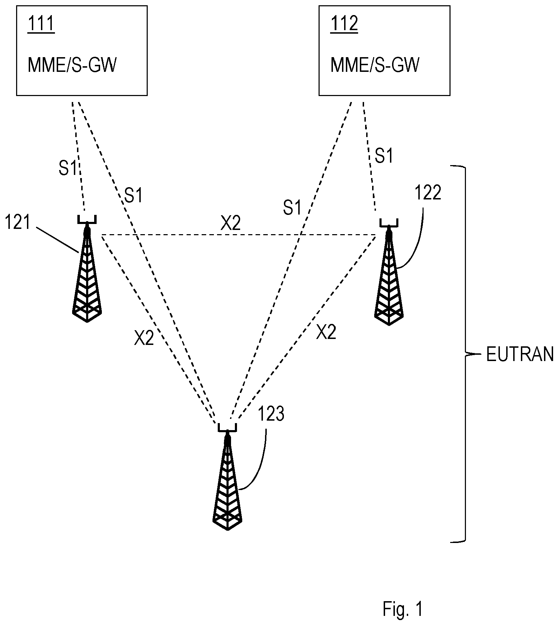

The E-UTRAN includes base stations called enhanced NodeBs, eNBs, providing the E-UTRA user plane and control plane protocol terminations towards the UE. The eNBs are interconnected with each other using the X2 interface. The eNBs are also connected using the S1 interface to the Evolved Packet Core, EPC, more specifically to the Mobility Management Entity, MME, by means of the S1-MME interface and to the Serving Gateway, S-GW, by means of the S1-U interface. The S1 interface supports many-to-many relation between MMEs/S-GWs and eNBs. The E-UTRAN architecture is illustrated in **figure 1****.**

The eNB hosts functionalities such as Radio Resource Management, RRM, radio bearer control, admission control, header compression of user plane data towards serving gateway, and/or routing of user plane data towards the serving gateway. The MME is the control node that processes the signalling between the UE and the core network, CN. Significant functions of the MME are related to connection management and bearer management, which are handled via Non Access Stratum, NAS, protocols. The S-GW is the anchor point for UE mobility, and also includes other functionalities such as temporary down link, DL, data buffering while the UE is being paged, packet routing and forwarding to the right eNB, and/or gathering of information for charging and lawful interception. The PDN Gateway, P-GW, is the node responsible for UE IP address allocation, as well as Quality of Service, QoS, enforcement, as further discussed below.

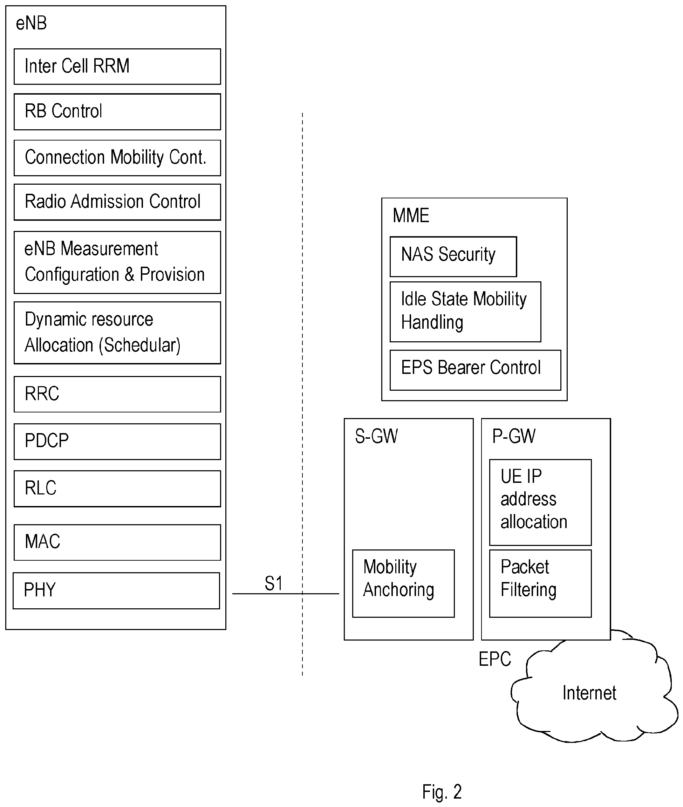

**Figure 2** illustrates a summary of functionalities of the different nodes, and the reader is referred to 3GPP TS 36.300 v.12.3.0 and the references therein for further details of functionalities of the different nodes. In **figure 2****,** blocks eNB, MME, S-GW, and P-GW illustrate logical nodes; blocks Inter Cell RRM, RB Control, Connection Mobility Cont., Radio Admission Control, eNB Measurement Configuration & Provision, Dynamic Resource Allocation (Scheduler), NAS Security, Idle State Mobility Handling, EPS bearer Control, Mobility Anchoring, UE IP address allocation, and Packet Filtering illustrate functional entities of the control plane; and blocks RRC, PDCP, RLC, MAC, and PHY illustrate the radio protocol layers.

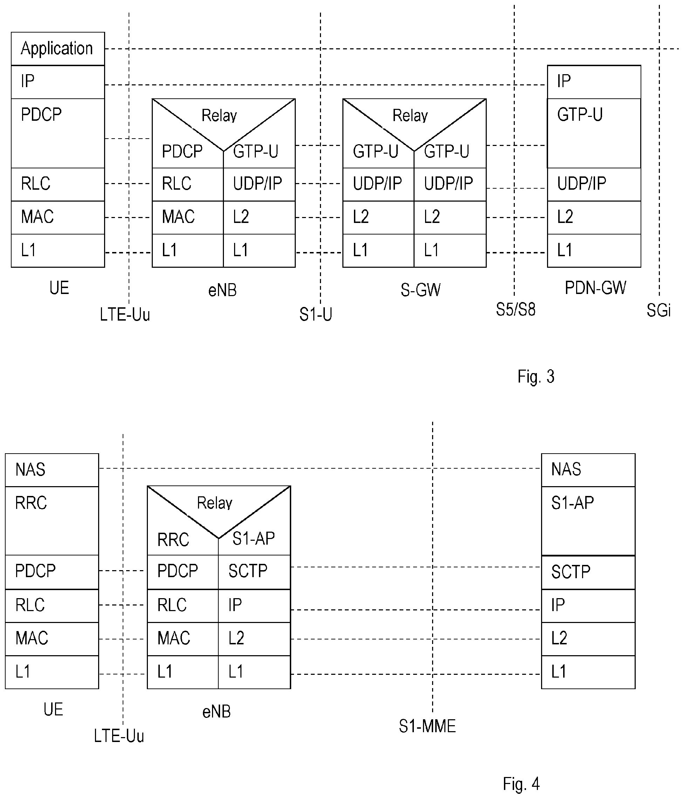

The radio protocol architecture of E-UTRAN is divided into the user plane and the control plane. **Figure 3** illustrates the protocol stack for the user-plane. The user plane protocol stack includes the Packet Data Convergence Protocol, PDCP, Radio Link Control, RLC, and Medium Access Control, MAC, which are terminated at the eNB. The PDCP manages IP packets in the user plane and it performs functionalities such as header compression, security, and reordering and retransmission during handover. The RLC layer is mainly responsible for segmentation (and corresponding assembly) of PDCP packets, so that they fit the size that is actually to be transmitted over the air interface. RLC can operate either in unacknowledged mode or acknowledged mode, where the latter supports retransmissions. The MAC layer performs multiplexing of data from different radio bearers, and it is the one that informs the RLC about the size of the packets to provide, which is decided based on the required QoS each radio bearer and the current capacity available to the UE.

**Figure 4** illustrates the control plane protocol stack. The layers below the Radio Resource Control, RRC, layer perform the same functionality as in the user plane, except that there is no header compression in the control plane. The main functions of the RRC are the broadcasting of system information, RRC connection control (establishment, modification, and release of RRC connection, establishment of signalling radio bearers, SRB, and data radio bearers, DRBs, handover, configuration of lower protocol layers, radio link failure recovery, etc.), and measurement configuration and reporting. Details of the RRC protocol functionalities and procedures can be found in 3GPP TS 36.331 v12.3.0.

A UE is uniquely identified over the S1 interface within an eNB with the eNB UE S1AP ID. When an MME receives an eNB UE S1AP ID, the MME stores it for the duration of the UE-associated logical S1-connection for this UE. Once known to an MME, this IE (information element) is included in all UE-associated S1-AP signalling. The eNB UE S1AP ID is unique within the eNB, and a UE is assigned a new S1AP ID after a handover by the target eNB.

From the MME side, a UE is uniquely identified using the MME UE S1AP ID. When an eNB receives MME UE S1AP ID, the eNB stores it for the duration of the UE-associated logical S1 connection for this UE. Once known to an eNB, this IE is included in all UE-associated S1-AP signalling. The MME UE S1AP ID is unique within the MME, and it is changed if the UE's MME changes (for example, handover between two eNBs connected to different MMEs).

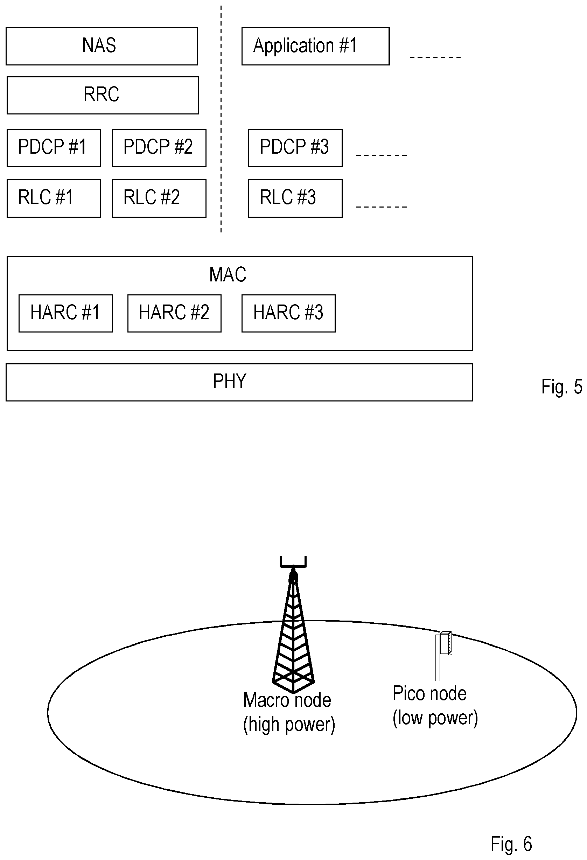

The flow of user plane and control plane data is illustrated in **figure 5****.** There is only one MAC entity per UE (unless the UE supports multiple carriers in the case of carrier aggregation), and under this MAC entity several Hybrid automatic repeat request, HARQ, processes might be running simultaneously, for rapid retransmissions. There is a separate RLC entity for each radio bearer and if the radio bearer is configured to use PDCP, there is also one separate PDCP entity for that bearer. A bearer is configured to use PDCP only if it is dedicated to a UE. In other words, multicast and broadcast data do not utilise PDCP both in the control and user plane, and the PDCP is used only for dedicated control message in the control plane and for dedicated UL/DL data in the user plane.

At the transmitting side, each layer receives a Service Data Unit, SDU, from a higher layer, and sends a Protocol Data Unit, PDU, to the lower layer. For example, PDCP PDUs are sent towards the RLC, and they are RLC SDUs from RLC point of view, which in turn sends RLC PDUs towards the MAC, which are MAC SDUs from the MAC point of view. At the receiving end, the process is reversed, i.e. each layer passing SDUs to the layer above it, where they are perceived as PDUs.

A UE can have multiple applications running at the same time, each having different QoS requirements, for example, VoIP, browsing, file download, etc. To support these different requirements, different bearers are set up, each being associated with a respective QoS. An EPS bearer/E-RAB (Evolved Radio Access Bearer) is the level of granularity for bearer level QoS control in the EPC/E-UTRAN. That is, Service Data Flows, SDF, mapped to the same EPS bearer receive the same bearer level packet forwarding treatment, e.g. scheduling policy, queue management policy, rate shaping policy, RLC configuration, etc.

One EPS bearer/E-RAB is established when the UE connects to a Packet Data Network, PDN, and that remains established throughout the lifetime of the PDN connection to provide the UE with always-on IP connectivity to that PDN. That bearer is referred to as the default bearer. Any additional EPS bearer/E-RAB that is established to the same PDN is referred to as a dedicated bearer. The initial bearer level QoS parameter values of the default bearer are assigned by the network, based on subscription data. The decision to establish or modify a dedicated bearer can only be taken by the EPC, and the bearer level QoS parameter values are always assigned by the EPC.

The packets of an EPS bearer are transported over a radio bearer between the UE and eNB. An S1 bearer transports the packets of an EPS bearer between the eNB and S-GW. An E-RAB is actually a concatenation of these two bearers (i.e. radio bearer and S1 bearer), and the two bearers are mapped on a one to one fashion. An S5/S8 bearer transports the packets of the EPS bearer between the S-GW and P-GW, and completes the EPS bearer. Here also there is a one to one mapping between the E-RAB and S5/S8 bearer.

A heterogeneous deployment or heterogeneous network, as illustrated in **figure 6****,** includes network transmission nodes, e.g. micro and pico nodes or base stations, operating with different transmit powers and with overlapping coverage areas. A heterogeneous deployment/network is considered as an interesting deployment strategy for cellular networks. In such a deployment, the low-power nodes ("pico nodes") are typically assumed to offer high data rates (Mbit/s) and/or to provide increased/high capacity (users/m2 or Mbit/s/m2) in the local areas where increased data rates/capacity is/are needed/desired, while the high-power nodes ("macro nodes") are assumed to provide full-area coverage. In practice, the macro nodes may correspond to currently deployed macro cells while the pico nodes are later deployed nodes, provided to extend capacity and/or achievable data rates within the macro-cell coverage area where needed/desired. **Figure 6** illustrates a heterogeneous deployment with a higher-power macro node and a lower-power pico node. In a typical case, there may be multiple pico nodes within the coverage area of a macro node.

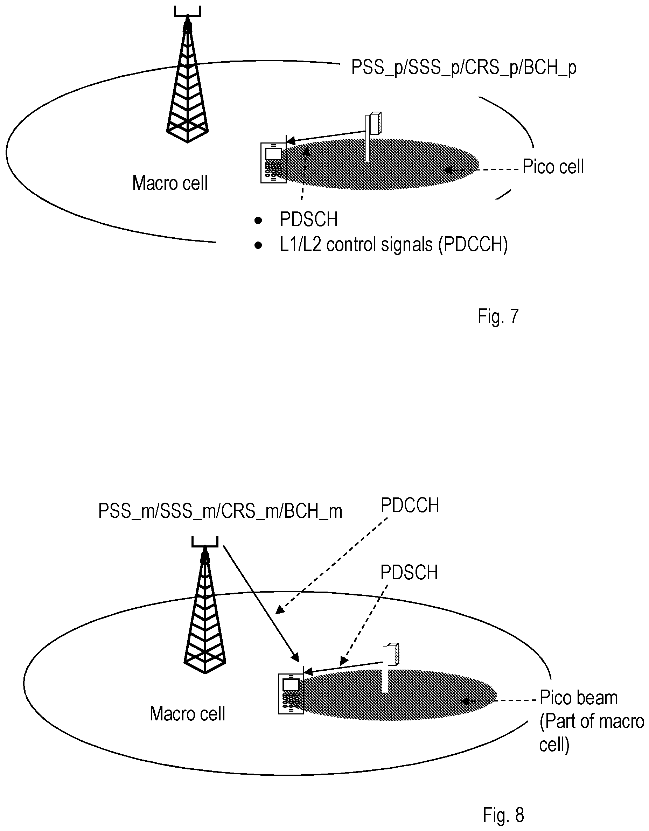

A pico node of a heterogeneous deployment may operate as a cell of its own (a "pico cell") as shown in **figure 7****.** This means that, in addition to downlink and uplink data transmission/reception, the pico node also transmits the full set of common signals/channels associated with a cell. In the LTE context this full set of common signals/channels includes:
- The Primary and Secondary Synchronisation Signals, PSS and SSS, corresponding to the Physical Cell Identity of the pico cell.
- The Cell-specific reference signals, CRS, also corresponding to the Physical Cell Identity of the cell. The CRS can, for example, be used for downlink channel estimation to enable coherent demodulation of downlink transmissions.
- The Broadcast channel, BCH, with corresponding pico-cell system information. Additional system information may also be transmitted on the PDSCH physical channel.

As the pico node transmits the common signals/channels, the corresponding pico cell can be detected and selected (connected to) by a UE.

If the pico node corresponds to a cell of its own, also so-called L1/L2 control signalling on the Physical Downlink Control Channel of PDCCH (as well as Physical Control Format Indicator Channel or PCFICH and Physical Hybrid-ARQ Indicator Channel or PHICH) are transmitted from the pico node to connected terminals, in addition to downlink data transmission on the Physical Downlink Shared Channel or PDSCH. The L1/L2 control signalling, for example, provides downlink and uplink scheduling information and Hybrid-ARQ-related information to terminals within the cell. This is shown in **figure 7****.**

**Figure 7** illustrates a heterogeneous deployment where the pico node corresponds to a cell of its own (a "pico cell"). The indices "p" and "m" indicate common signals/channels for the pico and macro cell respectively. As shown in **figure 7****,** the pico node uses/transmits its own primary and secondary synchronisation signals PSSp and SSSp, cell specific reference signals CRSp, and broadcast channel BCHp that are independent of (e.g. different than) the primary and secondary synchronisation signals PSSm and SSSm, cell specific reference signals CRSm, and broadcast channel BCHm used/transmitted by the macro node. Accordingly, the UE may communicate through the pico node without support from the macro node.

Alternatively, a pico node within a heterogeneous deployment may not correspond to a separate cell of its own, but may instead provide a data-rate and/or capacity "extension" of the overlaid macro cell. This is sometimes known as "shared cell" or "soft cell". In this case, at least the CRS, physical broadcast channel, PBCH, PSS and SSS are transmitted from the macro node, but not the pico node. The PDSCH can be transmitted from the pico node. To allow for demodulation and detection of the PDSCH, despite the fact that no CRS is transmitted from the pico node, Demodulation reference signal, DM-RS, may be transmitted from the pico node together with the PDSCH. The UE-specific reference signals can then be used by the terminal for PDSCH demodulation/detection. This is shown in **figure 8****,** which illustrates a heterogeneous deployment where the pico node does not correspond to or define a cell of its own.

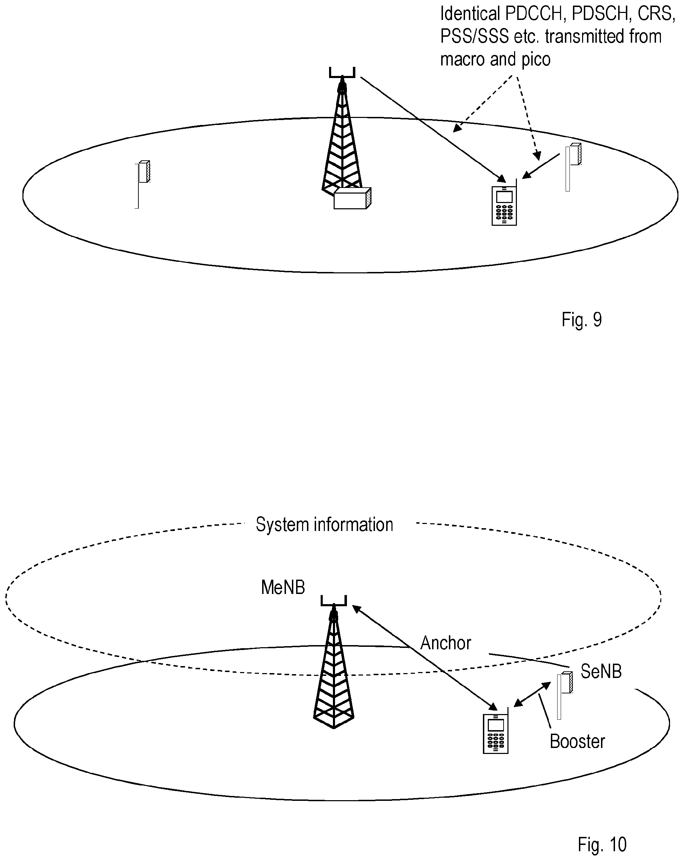

Transmitting data from a pico node not transmitting CRS as described above may require DM-RS support in/at the UE ("non-legacy terminal"). In LTE, DM-RS-based PDSCH reception is supported in Rel-10 and for Frequency Division Duplex, FDD, while for the L1/L2 control signalling, DM-RS-based reception is planned for Rel-11. For terminals not supporting DM-RS-based reception ("legacy terminals") one possibility in a shared cell setting is to exploit SFN-type (Single Frequency Network type) of transmission. In essence identical copies of the signals and channels necessary for a legacy terminal are transmitted simultaneously from the macro and pico nodes. From a terminal perspective, this will look as a single transmission. Such an operation, which is illustrated in **figure 9****,** may only provide a Signal to Interference and Noise Ration, SINR, gain, which can be translated into a higher data rate but not a capacity improvement, because transmission resources cannot be reused across sites within the same cell. As shown in **figure 10****,** SFN operation may be provided with identical transmissions from macro and pico to a UE.

Assume that the macro nodes are able to provide coverage and the pico nodes are provided only for capacity enhancements (i.e. to reduce coverage holes), another alternative architecture is where the UE maintains connectivity to the macro node, or, more generally, the "Master eNB", MeNB, all the time, and adds connectivity to the pico node, or, more generally, the "Secondary eNB", SeNB, when it is in the coverage area of the pico node. The link between the UE and the MeNB may be referred to as the "anchor" link, while the link between the UE and SeNB can be referred to as the "booster" link. When both connections are active, the anchor link can be used for control signalling while the booster link is used for data. In addition, it may also be possible to send data via the anchor link. This is illustrated in **figure 10****.** In this case, as in the previous cases, the system information is shown to be sent only from the MeNB, but it is still possible to send it also from the SeNB. As shown in **figure 10****,** in soft cell operation, the UE may have multiple connections with both the anchor and booster nodes, also referred to as the macro and pico nodes.

The term "dual connectivity" is used to refer to operation where the UE consumes radio resources provided by at least two different network points connected with non-ideal backhaul. Furthermore, each eNB involved in dual connectivity for a UE may assume different roles. Those roles do not necessarily depend on the eNB's power class and can vary among UE.

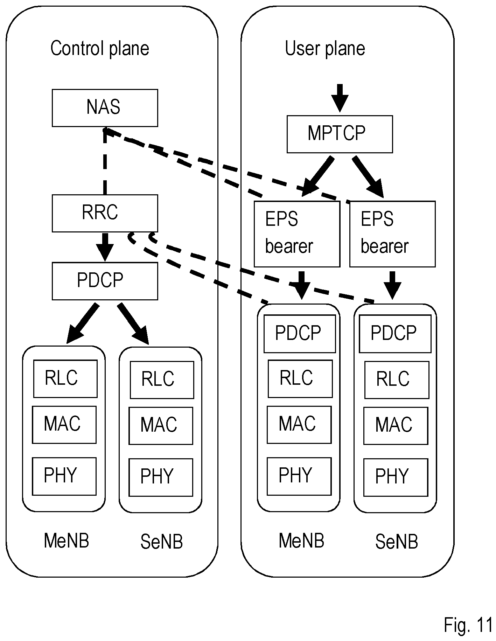

To support multiple connectivity to micro and pico nodes, several architectural options are possible both for the control and user planes. For the user plane, a centralised approach may be provided where the PDCP, or even the RLC, terminated at the anchor node only and the booster node terminates at the RLC, or even the MAC, level. A decentralised approach may be to have the booster to terminate at the PDCP level. A similar approach can be taken in the control plane, i.e. distributed or centralised PDCP/RLC, but on top of that the additional dimension of centralising or distributing the RRC may be provided. **Figure 11** shows example control and user plane architectures where the user plane uses distributed PDCP, while the control plane is centralised at the PDCP level at the anchor node. Note that in **figure 11****,** user plane aggregation (i.e. the possibility to split the packets belonging to one application data flow over the anchor and booster links) can be realised by using a higher layer aggregation protocol like multi-path TCP, MTCP.

Random access, RA, serves as an uplink control procedure to enable the UE to access the network. The RA procedures serve three main purposes:
- The RA procedures let the UE align its uplink, UL, timing to that expected by the eNodeB in order to minimise interfering with other UEs transmissions. UL time alignment is a requirement in E-UTRAN before data transmissions can commence.
- The RA procedures provide a means for the UE to notify the network of its presence and enable the eNodeB to give the UE initial access to the system.
- The RA procedures notify the eNB that the UE has data in its uplink buffer.

In addition to its usage during initial access, the RA procedures are also used when the UE has lost the uplink synchronisation.

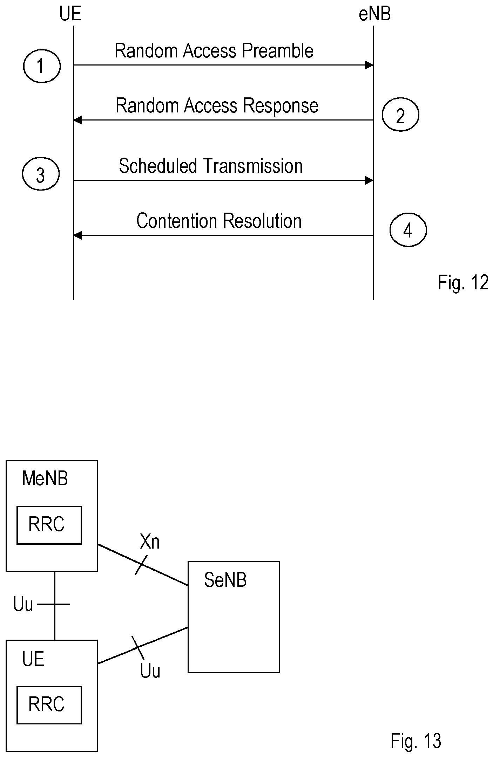

The basic RA Procedure is a four-phase procedure as outlined in **figure 12****.**
- Phase 1 consists of transmission of a random access preamble by the UE, allowing the eNB to estimate the transmission timing of the UE. Uplink synchronisation is necessary as the UE otherwise cannot transmit any uplink data. The preamble used in this step can be either randomly selected by the UE in contention-based Random Access procedures, or dedicated by the network in contention-free Random Access procedures. The latter solution can be used in case of handover, for example, when the target eNB may signal dedicated random access information to the source eNB, which will further convey that information to the UE.
- Phase 2 consists of the network transmitting the Random Access Response message. This message includes the timing advance command to correct the uplink timing, based on the timing of arrival measurement in the first step. In addition to establishing uplink synchronisation, the second step also assigns uplink resources. In the case of contention based random access, a temporary identifier to the UE is included, to be used in the third step in the random access procedure.
- Phase 3 consists of signalling from the UE to the eNB, also called as Msg3. This step is included in contention-based Random Access. A primary function of this message is to uniquely identify the UE. The exact content of this signalling depends on the state of the UE, e.g. whether it is previously known to the network or not. In connected state, the UE includes at least its C-RNTI in the Msg3.
- Phase 4, the final phase, is responsible for contention resolution to solve the potential case when in case multiple UEs tried to access the system on the same resource. This phase is used in contention-based Random Access procedure.

The UE obtains information about which preambles are available, either to select one at random or to use a specified one, whether one or repeated preambles should be used, what the desired received power level should be at the base station, what power increase step should be used in case of failed preamble reception, what the maximum number of random access preamble transmission is, when it is allowed to transmit the preamble, etc.

If the UE obtains the Phase I information via dedicated signalling, such as when random access is performed as part of handover (the dedicated signalling originated from the target cell, forwarded to the UE by the serving cell), a specific preamble may be configured. In addition, the timer T304 is started with a value provided by the dedicated signalling.

The UE determines a random access resource for preamble transmission in consideration of the retrieved information. Either, the information is related to the downlink synchronisation of the serving cell, or related to a non-serving cell. The latter can be the case when random access is used to get established in a target cell during handover.

The UE monitors PDCCH of the cell for random access response in the RA response window, which starts at the subframe that contains the end of the preamble transmission plus three subframes and has the length *ra-Response WindowSize.*

If no response has been received, and the max number of preamble transmissions has been reached, or the timer T304 has expired, the handover attempt is considered failed and higher layer is informed. Then, the UE initiates the RRC connection reestablishment procedure to restore the connection to the source cell, specifying the reestablishment cause to handover failure. Furthermore, a radio link failure report is prepared.

There are currently different options for control plane termination for dual connectivity. The option considered here is where the UE has one single RRC entity, which communicates with a single RRC entity located in the MeNB on the network side. This is shown in **figure 13****.** In this scenario, all control signalling between the UE and the network terminates in the MeNB. Only the MeNB generates the final RRC messages to be sent towards the UE after coordination of RRM functions between MeNB and SeNB. The UE RRC entity sees all messages coming only from one entity (in the MeNB) and the UE only replies back to that entity.

Note, that one option could foresee a "virtual RRC" entity in the SeNB that generates parts of the RRC message to be finally sent to the UE by the MeNB. This scheme is similar to the case of handover, HO, where the target eNB generates the RRC message to be sent to the UE by the source eNB. The difference between the dual-connectivity situation scenario presented here and HO is that in the former scenario the MeNB may need to check the contents of the partial RRC message and assemble the final RRC message.

In the following, it can be assumed that each node controls its own radio resources. This is necessary, since an eNB acting as SeNB towards one UE may at the same time act as MeNB towards another UE. In other words, MeNB and SeNB are UE-specific roles of an eNB. Thus, to ensure efficient usage of radio resources, each eNB must be in control of its own radio resources and a distributed RRM needs to be assumed.

There is a need for a procedure between the MeNB and the SeNB to agree on the UE radio resource configuration. For instance, a procedure is needed to enable the setup, the modification or the handover of a UE bearer for which radio resources are provided by a radio network node (SeNB) that is different from the radio network node (MeNB) that hosts the RRC connection and the connection to the core network. In addition, there might be a need to modify the physical or MAC layer RRC configuration used in the SeNB.

One important thing to consider here are the UE capabilities. The UE capabilities indicate whether the UE supports some features (static), but also indicate what are the maximum amounts of certain radio resources that can be allocated (dynamically) to the UE (e.g. number of Robust Header Compression, ROHC, context sessions).

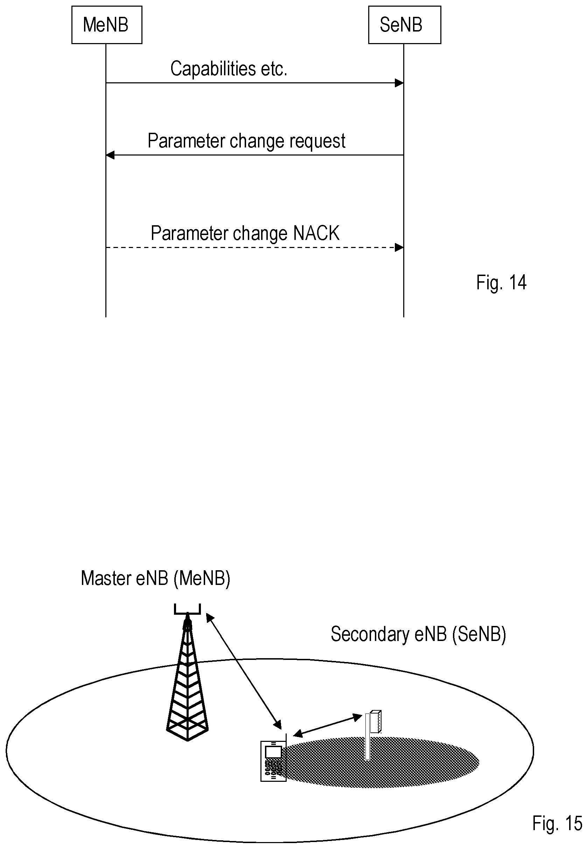

The assumed procedure for negotiating radio resource configuration of the connection between the UE and the SeNB is shown in **figure 14****,** and involves the following steps:
1. MeNB provides current radio resource configurations and capabilities of the UE for the SeNB over Xn. This may be done within the message that triggers the setup of resources within the SeNB.
2. The SeNB decides the radio resource configuration relevant for the SeNB and signals this to the MeNB over Xn. This may be done in response to the message triggering the setup of resources within the SeNB or during triggering the modification of already established resources.
3. The MeNB either accepts the radio resource configuration relevant for the SeNB, or rejects it and sends a NACK to the SeNB. If the parameter negotiation function was triggered during setup/HO of resources towards the SeNB, there might not be the need for an explicit ACK. In case of resource modification, if the radio resource configuration is accepted by the MeNB, it replies ACK back to the SeNB. If not, a NACK is sent.

The benefits of this solution are as follows:
- the current model with signalling bearer 1 and signalling radio bearer 2 (SRB1/SRB2) which currently is used in LTE is sufficient,
- It requires only one set of PDCP encryption keys for control plane,
- One entity takes the final decision -> no risk of exceeding capabilities, and
- No need for parallel procedures for the UE (current model applies).

Dual connectivity may be defined from the UE perspective wherein the UE may simultaneously receive and transmit to at least two different network points. Dual connectivity is one of the features that are being standardised within the umbrella work of small cell enhancements within 3GPP LTE Rel-12.

Dual connectivity may be defined for the case when the aggregated network points operate on the same frequency or in separate frequencies. In Rel-12, the focus has been on supporting deployments on separate frequencies. Further in Rel-12, it is assumed that the UE is capable of simultaneously receiving and transmitting from two different nodes. Dual connectivity as a feature bears many similarities with carrier aggregation and Coordinated Multi Point, CoMP; the main differentiating factor is that dual connectivity is designed considering a relaxed backhaul and less stringent requirements on synchronisation between the network points. This is in contrast to carrier aggregation and CoMP, wherein, before Rel-12, tight synchronisation and a low-delay backhaul have been assumed between connected network points.

A UE in dual connectivity maintains simultaneous connections to MeNB and SeNB nodes as illustrated in **figure 15****.**

As the name indicates, the MeNB terminates the control plane connection towards the UE and is thus the controlling node of the UE. In addition to the MeNB, the UE may be connected to one or several SeNBs for added user plane support. In Rel-12, the number of SeNBs is limited to one however more SeNBs may be supported in future releases.

The MeNB and SeNB roles are defined from a UE point of view. This means that an eNB that acts as a MeNB to one UE may act as SeNB to another UE.

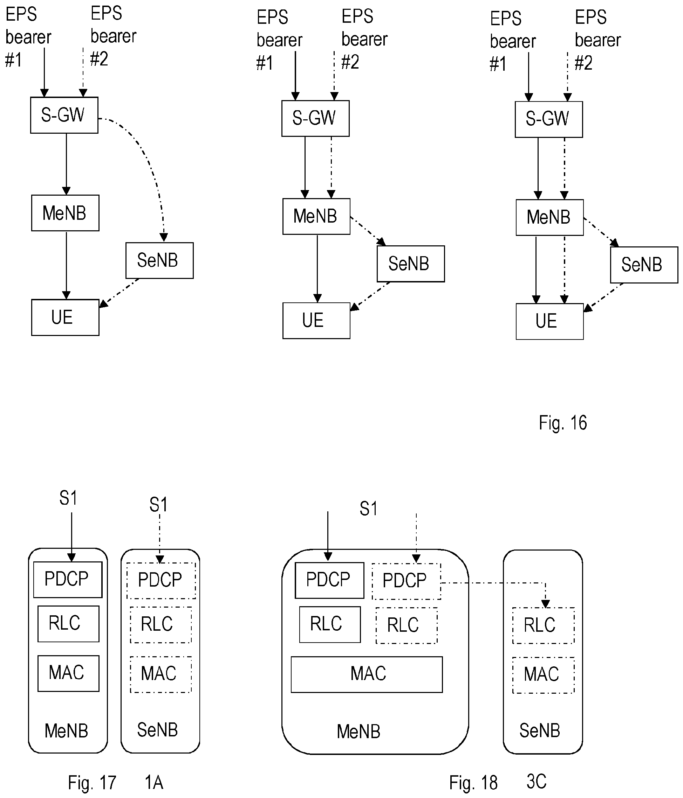

**Figure 16** illustrates three options for splitting the U-Plane data. The main differentiating factors between the three options lies in the backhaul usage and the support for data split within or between EPS bearers. (1) Option 1: S1-U terminates in SeNB. (2) Option 2: S1-U always terminates in MeNB, no bearer split in RAN. (3) Option 3: S1-U always terminates in MeNB, bearer split in RAN.

Considering these three options, it is unclear whether one single option will suit all aspects. Given a non-ideal backhaul with limited capacity, option 1 is most appropriate since it avoids the routing of user plane data via the MeNB, creating possible bottlenecks. With option 1, improved mobility robustness by separating control and user plane termination can be achieved but implies signalling towards the CN for the path switch. This can be used to maintain a robust control plane connection with the macro layer, while offloading user plane traffic to the pico layer for improved throughput.

Furthermore, option 1 also allows user plane aggregation. Multi-path TCP, MPTCP, can be used to split the data between the two EPS bearers. The main principle of MPTCP is to aggregate a certain TCP connection over multiple paths. MPTCP has one main flow and multiple sub flows and is capable of distributing load on all interfaces. MPTCP is currently under standardisation process within Internet Engineering Task Force, IETF. As the multiplexing of different connections is on TCP level, it allows separate congestion control for each sub flow, overcoming the bottleneck problem of the first option discussed above. Though aggregation via MPTCP is applicable only for TCP based traffic, this will not be a big disadvantage as the majority of Internet/mobile broadband data is TCP based. MPTCP can also be implemented in a MPTCP proxy, so it doesn't need to be End-to-End, E2E. For small object sizes, MPTCP can give gain from parallel slow start phases. Further study is needed to evaluate the performance of option 1 and MPTCP.

However, in deployments where backhaul capacity is not an issue, option 3 may provide higher expected user resource aggregation gains through intra bearer user plane aggregation as the splitting point is closer to the radio interface, compared with option 1. However, it requires L2 to cater for splitting, flow control and reordering. Option 2 is similar to option 3, but would miss the opportunities for user plane aggregation gains, although it assumes high backhaul capacity. Considering the aforementioned and other aspects, options 1 and 3 are currently within the scope of the Rel-12 work item.

For bearer split option 1, the user plane protocol termination 1A is shown in **figure 17****.** For bearer split option 3, several protocol termination options can be envisioned, depending on where in the protocol stack the data is split. For Rel-12, a protocol split shown in **figure 18** was selected, referred to as 3C.

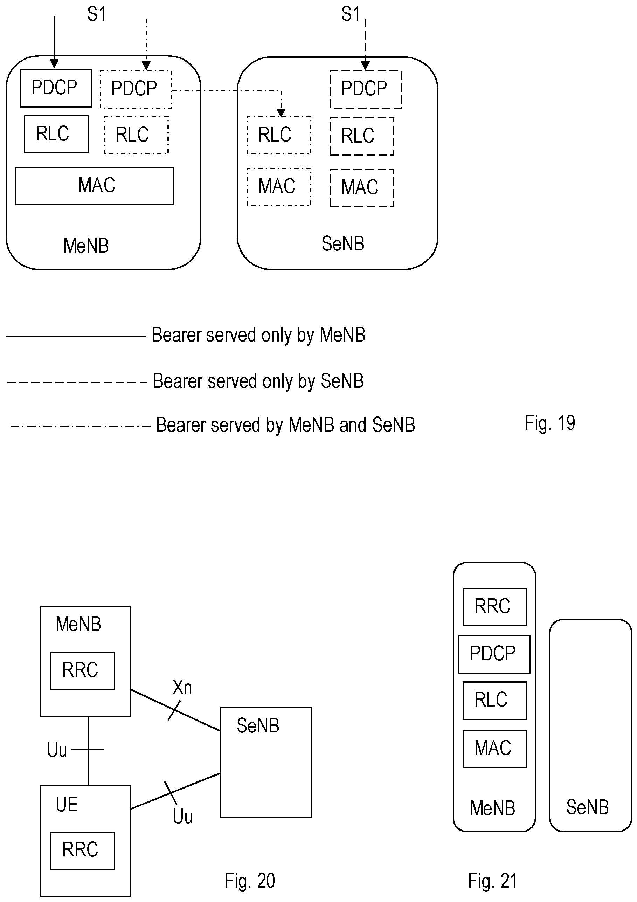

The selected user plane architecture options 1A and 3C should preferably not result in different specifications, but should rather be a configuration option. Therefore, it was proposed to have a common architecture with 3 types of bearers rather than two different architectures. In **figure 19****,** the common architecture for user plane architectures 1A and 3C is drawn, illustrating three bearer types and their termination points. In the common architecture, there are three types of bearers:
- A bearer only served by MeNB, referred to as Master Cell Group, MCG, Data Radio Bearer, DRB, i.e. a DRB for which resources are provided by the Master Cell Group.
- A bearer only served by SeNB, referred to as Secondary Cell Group (SCG DRB), i.e. a DRB for which resources are provided by the Secondary Cell Group.
- A bearer served by MeNB and SeNB, referred to as split DRB.

Both contention-free and contention-based RA procedures are supported towards the SeNB. Parallel RA procedures are supported if RA Preamble transmissions do not overlap, no requirement to coordinate Physical Random Access Channel, PRACH, resource in network side.

If a bearer is mapped into either MeNB or SeNB resources, the UE sends Buffer Status Report, BSR, information for that bearer to the eNB which owns that bearer.

Working assumption is to have separate Discontinuous Reception, DRX, configurations and operations (timers and active time).

Activation and deactivation are supported for SCG. MeNB can activate and deactivate Cells associated with MeNB. SeNB can activate and deactivate cells associated with SeNB.

It is agreed to have two MAC entities in the UE side in dual connectivity operation: UE side MAC entity is configured per Cell Group, i.e. one MAC for MCG and the other MAC for SCG.

The control plane architecture is designed along the following principles:
- each eNB is able to handle UEs autonomously, i.e., provide the Primary Cell, PCell, to some UEs while acting as SeNB for other;
- there will be only one S1-MME Connection per UE;
- each eNB involved in dual connectivity (DC) owns its radio resources, however some coordination is still needed between MeNB and SeNB;
- a UE always stays in a single RRC state, i.e. either RRC_CONNECTED or RRC_IDLE.

**Figure 20** illustrates the control plane architecture. The MeNB generates the final RRC messages to be sent towards the UE after the coordination of RRM functions between MeNB and SeNB. The UE RRC entity sees all messages as coming only from one entity (in the MeNB) and the UE only replies back to that entity.

In Rel-12, L2 protocol termination for the control plane is made in MeNB, see **figure 21****.** No further enhancements to the L2 protocols are required with this approach.

**Figure 22** depicts a preliminary overall signalling scheme captured in the 3GPP study item TR 36.842 for addition and modification of SeNB resources for dual connectivity operation, based on decisions taken in RAN2 during the study item phase. The same basic procedure is expected to be applicable to MCG DRBs, SCG DRBs and split DRBs.

As depicted in **figure 22****,** activating/modifying resources at SeNB for dual connectivity operation could involve the following steps:
1a. The MeNB decides to request the SeNB to add or modify radio resources for a specific E-RAB.
1b. The SeNB decides to modify radio resources for a specific E-RAB. This step may include additional coordination between the SeNB and MeNB to make sure that e.g. the capabilities of the UE are not exceeded
2. The MeNB requests the SeNB to allocate/modify radio resources. Depending on the actual scenario, it might contain E-RAB characteristics (E-RAB parameters, TNL address information corresponding to the UP option), UE Capabilities and the current radio resource configuration of the UE etc.
3. If the RRM entity in the SeNB is able to admit the resource request, it configures respective radio resources and, dependent on the UP option, respective transport network resources. The SeNB may also allocate dedicated RACH preamble for the UE so that synchronisation of the SeNB radio resource configuration can be performed.
4. The SeNB provides the new radio resource configuration to the MeNB (for UP alternative 1A it may contain, dependent on the actual scenario, S1 DL TNL address information for the respective E-RAB, for UP alternative 3C X2 DL TNL address information).
5. The MeNB endorses the new configuration and triggers the UE to apply it. The UE starts to apply the new configuration.
6./7. In case of UP option 1A the MeNB may, dependent on respective E-RAB characteristics, take actions to minimise service interruption due to activation of dual connectivity (Data forwarding, SN Status Report). Note: Whether the UP resources established for data forwarding for UP option 1A need to be released explicitly may be further discussed.
8. The UE completes the reconfiguration procedure. In case of UP options 3C, transmission of user plane data from the SeNB to the UE may take place after step 8 or 9 depending on the synchronisation procedure.
9. The UE performs synchronisation towards the cell of the SeNB if needed.
10. The SeNB reports to MeNB the detection of synchronisation with the UE, confirming that the new configuration is in use. Receipt of the message in step 10 by the MeNB successfully completes the overall SeNB Addition/Modification procedure on X2. Note: Depending on the decision on the order of RRC reconfiguration and synchronisation or on the support of synchronisation, step 10 might be either necessary as described above or in the reverse direction (from MeNB to SeNB).
11.-13. For UP option 1A, if applicable, the update of the UP path towards the EPC is performed.

Note: **Figure 22** assumes that S-GW is not changed.

In **figure 22****,** the UE first sends RRCRConnectionReconfigurationComplete towards the MeNB (Step 8) and after that triggers the RA towards the SeNB (Step 9). After SeNB has received the Random Access from the UE, it knows that the UE has applied the new configuration. After this the SeNB notifies the MeNB about completion of the procedure (Step 10). For purposes of discussion, this may be called Alternative 1.

In an Alternative 2, the MeNB sends a confirmation to the SeNB after receiving RRCConnectionReconfiguration.

Both alternatives are associated with several drawbacks. Alternative 1: Initial addition of the SeNB. In this scenario, the UE is not synchronised towards the SeNB and thus Random Access towards SeNB is needed with both alternatives to obtain UL synchronisation. This Random Access can provide timely information to the SeNB when the UE applied the new RRCConnectionReconfiguration.

Alternative 2: Modification of SeNB resources. In this scenario, the UE is already synchronised towards the SeNB and thus Random Access would not necessarily be needed from UL synchronisation point of view. However, if this step would be skipped, there would not be timely indication to the SeNB when the radio resources are applied. Random Access in this case can be compared to current intra-cell handover that can be used to synchronise RRC configurations.

The main problem with Alternative 2 is that complete message may arrive to the SeNB much later than the UE takes the new RRC Configuration into use. It means that the SeNB does not have any knowledge when actually the UE applies the new configuration.

Also in LTE, if intra-cell HO is not used during RRCConnectionReconfiguration, there may be a time period where UE's and network's RRC configurations are not synchronised. However, this time period tends to be short due to the relatively tight processing requirements for RRCConnectionReconfiguration. In Dual Connectivity, the uncertainty period may be much longer. For example, if the backhaul delay is 30 ms, the uncertainty period could be more than 80 ms.

However, for some RRC configurations, the longer uncertainty period may be acceptable. In those cases, the network can decide to omit the Random Access procedure to save RACH resources. In this case, first UL message can act as the indication of activation of RRC configuration.

It is generally the payload (such as RRC message or other UL data) that triggers the actual Random Access procedure towards the eNB in the MAC layer. Then this payload (such as RRCConnectionRequest or RRCConnectionReconfigurationComplete) is sent in Msg3 (as discussed above). Contention free Random Access can occur also without payload when triggered by the PDCCH order.

In Dual Connectivity scenario, there is no RRC message to send towards the SeNB and thus there is not necessarily any payload for the Random Access towards the SeNB. In addition, if Random Access is not used, it would be useful for the SeNB to know when exactly the UE applies the new RRC Configuration. It may not be possible to use an RRC message if there is no RRC entity in the SeNB. Instead, particular embodiments may introduce a MAC Control Element, CE, for this purpose.

Several of the techniques and methods described above may be implemented using radio circuitry and electronic data processing circuitry provided in a wireless terminal or device, e.g. a network node, wireless device, UE, SeNB, MeNB.

**Figure 35** illustrates features of an example terminal 3100 according to several embodiments of the above described methods and arrangements, such as the UE, the MeNB and the SeNB. Terminal 3500, which may be a UE configured for dual-connectivity operation with an LTE network (E-UTRAN), for example, comprises a transceiver unit 3520 for communicating with one or more base stations as well as a processing circuit 3510 for processing the signals transmitted and received by the transceiver unit 3520. Transceiver unit 3520 includes a transmitter 3525 coupled to one or more transmit antennas 3528 and receiver 3530 coupled to one or more receiver antennas 3533. The same antenna(s) 3528 and 3533 may be used for both transmission and reception. Receiver 3530 and transmitter 3525 may use known radio processing and signal processing components and techniques, typically according to a particular telecommunications standard such as the 3^{rd} Generation Partnership Project, 3GPP, standards for LTE. Note also that transmitter unit 3520 may comprise separate radio and/or baseband circuitry for each of two or more different types of radio access network, such as radio/baseband circuitry adapted for E-UTRAN access and separate radio/baseband circuitry adapted for Wi-Fi access. The same applies to the antennas - while in some cases one or more antennas may be used for accessing multiple types of networks, in other cases one or more antennas may be specifically adapted to a particular radio access network or networks. Because the various details and engineering trade-offs associated with the design and implementation of such circuitry are well known and are unnecessary to a full understanding of the embodiments, additional details are not shown here.

Processing circuit 3510 comprises one or more processors 3540 coupled to one or more memory devices 3550 that make up a data storage memory 3555 and a program storage memory 3560. Processor 3540, identified as CPU 3540 in figure 35, may be a microprocessor, microcontroller, or digital signal processor, in some embodiments. More generally, processing circuit 3510 may comprise a processor/firmware combination, or specialised digital hardware, or a combination thereof. Memory 3550 may comprise one or several types of memory such as read-only memory (ROM), random-access memory, cache memory, flash memory devices, optical storage devices, etc. Because terminal 3500 supports multiple radio access networks, processing circuit 3510 may include separate processing resources dedicated to one or several radio access technologies, in some embodiments. Again, because the various details and engineering trade-offs associated with the design of baseband processing circuitry for mobile devices are well known and are unnecessary to a full understanding of the embodiments, additional details are not shown here.

Typical functions of the processing circuit 3510 include modulation and coding of transmitted signals and the demodulation and decoding of received signals. In several embodiments of the present invention, processing circuit 3510 is adapted, using suitable program code stored in program storage memory 3560, for example, to carry out one of the techniques described above for access network selection. Of course, it will be appreciated that not all of the steps of these techniques are necessarily performed in a single microprocessor or even in a single module.

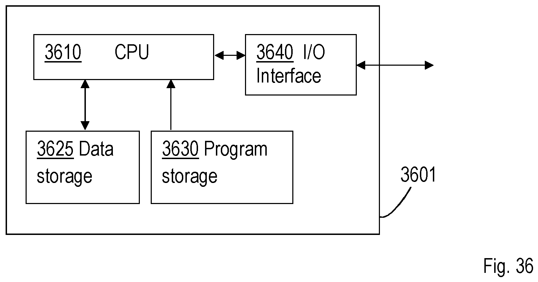

Similarly, several of the techniques and processes described above can be implemented in a network node, such as an eNodeB or other node in a 3GPP network. Figure 36 is a schematic illustration of a node 3601, e.g. a MeNB and/or a SeNB, in which a method embodying any of the presently described network-based techniques can be implemented. A computer program for controlling the node 3601 to carry out a method embodying the present embodiments is stored in a program storage 3630, which comprises one or several memory devices. Data used during the performance of a method embodying the present embodiments is stored in a data storage 3625, which may also comprise one or more memory devices. During performance of a method embodying the present embodiments, program steps are fetched from the program storage 3630 and executed by a Central Processing Unit (CPU) 3610, retrieving data as required from the data storage 3625. Output information resulting from performance of a method embodying the present embodiments can be stored back in the data storage 3625, or sent to an Input/Output (I/O) interface 3640, which includes a network interface for sending and receiving data to and from other network nodes and which may also include a radio transceiver for communicating with one or more terminals.

Accordingly, in various embodiments of the invention, processing circuits, such as the CPU 3610 and memory circuits 3625 and 3630 in **figure 36****,** are configured to carry out one or more of the techniques described in detail above. Likewise, other embodiments may include radio network controllers including one or more such processing circuits. In some cases, these processing circuits are configured with appropriate program code, stored in one or more suitable memory devices, to implement one or more of the techniques described herein. Of course, it will be appreciated that not all of the steps of these techniques are necessarily performed in a single microprocessor or even in a single module.

It will be appreciated by the person of skill in the art that various modifications may be made to the above described embodiments without departing from the scope of the present solution. For example, although embodiments have been described with examples that include a communication system compliant to the 3GPP specified LTE standard specification, it should be noted that the solutions presented may be equally well applicable to other networks that support dual connectivity. The specific embodiments described above should therefore be considered exemplary rather than limiting the scope of the invention. Because it is not possible, of course, to describe every conceivable combination of components or techniques, those skilled in the art will appreciate that the present embodiments can be implemented in other ways than those specifically set forth herein, without departing from essential characteristics of the embodiments. The present embodiments are thus to be considered in all respects as illustrative and not restrictive.

Although the preceding embodiments have been described for example purposes, it will be appreciated that other example embodiments include variations of and extensions to these enumerated examples, in accordance with the detailed procedures and variants described above. In the above-description, the terminology used is for the purpose of describing particular embodiments only and is not intended to be limiting. Unless otherwise defined, all terms (including technical and scientific terms) used herein have the same meaning as commonly understood by one of ordinary skill in the art. It will be further understood that terms, such as those defined in commonly used dictionaries, should be interpreted as having a meaning that is consistent with their meaning in the context of this specification and the relevant art and will not be interpreted in an idealised or overly formal sense expressly so defined herein.

When an element is referred to as being "connected", "coupled", "responsive", or variants thereof to another element, it can be directly connected, coupled, or responsive to the other element or intervening elements may be present. In contrast, when an element is referred to as being "directly connected", "directly coupled", "directly responsive", or variants thereof to another element, there are no intervening elements present. Like numbers refer to like elements throughout. Furthermore, "coupled", "connected", "responsive", or variants thereof as used herein may include wirelessly coupled, connected, or responsive. As used herein, the singular forms "a", "an" and "the" are intended to include the plural forms as well, unless the context clearly indicates otherwise. Well-known functions or constructions may not be described in detail for brevity and/or clarity. The term "and/or" includes any and all combinations of one or more of the associated listed items.

It will be understood that although the terms first, second, third, etc. may be used herein to describe various elements/operations, these elements/operations should not be limited by these terms. These terms are only used to distinguish one element/operation from another element/operation. Thus a first element/operation in some embodiments could be termed a second element/operation in other embodiments without departing from the teachings of present disclosure. The same reference numerals or the same reference designators denote the same or similar elements throughout the specification.

As used herein, the terms "comprise", "comprising", "comprises", "include", "including", "includes", "have", "has", "having", or variants thereof are open-ended, and include one or more stated features, integers, elements, steps, components or functions but does not preclude the presence or addition of one or more other features, integers, elements, steps, components, functions or groups thereof. Furthermore, as used herein, the common abbreviation "e.g.", which derives from the Latin phrase "exempli gratia," may be used to introduce or specify a general example or examples of a previously mentioned item, and is not intended to be limiting of such item. The common abbreviation "i.e.", which derives from the Latin phrase "id est," may be used to specify a particular item from a more general recitation.

Example embodiments are described herein with reference to block diagrams and/or flowchart illustrations of computer-implemented methods, apparatus (systems and/or devices) and/or computer program products. It is understood that a block of the block diagrams and/or flowchart illustrations, and combinations of blocks in the block diagrams and/or flowchart illustrations, can be implemented by computer program instructions that are performed by one or more computer circuits. These computer program instructions may be provided to a processor circuit of a general purpose computer circuit, special purpose computer circuit, and/or other programmable data processing circuit to produce a machine, such that the instructions, which execute via the processor of the computer and/or other programmable data processing apparatus, transform and control transistors, values stored in memory locations, and other hardware components within such circuitry to implement the functions/acts specified in the block diagrams and/or flowchart block or blocks, and thereby create means (functionality) and/or structure for implementing the functions/acts specified in the block diagrams and/or flowchart block(s).

These computer program instructions may also be stored in a tangible computer-readable medium that can direct a computer or other programmable data processing apparatus to function in a particular manner, such that the instructions stored in the computer-readable medium produce an article of manufacture including instructions which implement the functions/acts specified in the block diagrams and/or flowchart block or blocks. Accordingly, some embodiments may be embodied in hardware and/or in software (including firmware, resident software, micro-code, etc.) that runs on a processor such as a digital signal processor, which may collectively be referred to as "circuitry," "a module" or variants thereof.

It should also be noted that in some alternate implementations, the functions/acts noted in the blocks may occur out of the order noted in the flowcharts. For example, two blocks shown in succession may in fact be executed substantially concurrently or the blocks may sometimes be executed in the reverse order, depending upon the functionality/acts involved. Moreover, the functionality of a given block of the flowcharts and/or block diagrams may be separated into multiple blocks and/or the functionality of two or more blocks of the flowcharts and/or block diagrams may be at least partially integrated. Finally, other blocks may be added/inserted between the blocks that are illustrated, and/or blocks/operations may be omitted without departing from the scope of the disclosure. Moreover, although some of the diagrams include arrows on communication paths to show a primary direction of communication, it is to be understood that communication may occur in the opposite direction to the depicted arrows.

While the embodiments have been described in terms of several embodiments, it is contemplated that alternatives, modifications, permutations and equivalents thereof will become apparent upon reading of the specifications and study of the drawings. It is therefore intended that the following appended claims include such alternatives, modifications, permutations and equivalents as fall within the scope of the embodiments and defined by the pending claims.

## Claims

1. A method (2300) performed by a User Equipment, UE, operable in a wireless communication system, the wireless communication system being adapted to provide for dual connectivity between the UE and a Master evolved Node B, MeNB, and between the UE and a Secondary eNB, SeNB, the method being performed for modifying a radio resource configuration of the SeNB, with respect to the UE, currently being connected to the MeNB, the method comprising:
- receiving (2310), from the MeNB, a SeNB radio resource configuration for the radio resource of the SeNB with respect to the UE,
- sending (2320) a confirmation to the SeNB, confirming the received SeNB configuration, and
- applying (2340) the received SeNB configuration for the radio resource configuration of the SeNB,
**characterised by** sending (2320) the confirmation to the SeNB comprises sending a Medium Access Control, MAC, Control Element, CE, to the SeNB.

2. A method (2300) according to claim 1 , wherein applying (2340) the received SeNB configuration comprises applying the received SeNB configuration for a transmission after the confirmation has been sent.

3. A method (2300) according to claim 1 , wherein applying (140) the received SeNB configuration comprises applying the received SeNB configuration after a predetermined period of time, T, after the confirmation has been sent.

4. A method (2300) according to claim 1 , wherein applying (2340) the received SeNB configuration comprises applying the received SeNB configuration after a predetermined number, N, of transmissions after the confirmation has been performed.

5. A method (2300) according to claim 1 , wherein applying (2340) the received SeNB configuration comprises applying the received SeNB configuration after an indication has been received from the SeNB.

6. A method (2300) according to any of claims 1-5, wherein the confirmation is sent according to the received SeNB configuration or an old existing SeNB configuration.

7. A method (2300) according to any of claims 2-6, further comprising receiving (2315) an indication from the MeNB or the SeNB of which procedure the UE shall use for applying the received SeNB configuration.

8. A method (2400) performed by a Secondary evolved Node B, SeNB, operable in a wireless communication system, the wireless communication system being adapted to provide for dual connectivity between a User Equipment, UE, and a Master eNB, MeNB, and between the UE and the SeNB, the method being performed for modifying a radio resource configuration of the SeNB with respect to the UE, currently being connected to the MeNB, the method comprising:
- selecting (2410) a SeNB configuration for the radio resource of the SeNB with respect to the UE,
- sending (2420) the SeNB configuration to the MeNB, **characterised by**:
- receiving (2430) from the UE a Medium Access Control, MAC, Control Element, CE as a confirmation from the UE confirming reception of the sent SeNB configuration, and
- determining (2440) that the UE has taken the SeNB configuration into use.

9. A method (2400) according to claim 8, wherein determining (2440) that the UE has taken the SeNB configuration into use comprises sending an indication to the UE to start applying the SeNB configuration.

10. A method (2400) according to any of claims 8-9, further comprising notifying (2450) the MeNB of successful completion of the modification of the radio resource configuration of the SeNB.

11. A User Equipment, UE, (2600, 2700) operable in a wireless communication system, the wireless communication system being adapted to provide for dual connectivity between the UE and a Master evolved Node B, MeNB, and between the UE and a Secondary eNB, SeNB, the UE being configured for modifying a radio resource configuration of the SeNB, with respect to the UE, currently being connected to the MeNB, the UE being configured for:
- receiving, from the MeNB, a SeNB radio resource configuration for the radio resource of the SeNB with respect to the UE, **characterised by**:
- sending a confirmation to the SeNB by sending a Medium Access Control, MAC, Control Element, CE, to the SeNB confirming the received SeNB configuration, and
- applying the received SeNB configuration for the radio resource configuration of the SeNB.

12. A Secondary evolved Node B, SeNB, (2800, 2900) operable in a wireless communication system, the wireless communication system being adapted to provide for dual connectivity between a User Equipment, UE, and a Master eNB, MeNB, and between the UE and the SeNB, the method being performed for modifying a radio resource configuration of the SeNB with respect to the UE, currently being connected to the MeNB, the SeNB being configured for:
- selecting a SeNB radio resource configuration for the radio resource of the SeNB with respect to the UE,
- sending the SeNB configuration to the MeNB, **characterised by**:
- receiving, from the UE a Medium Access Control, MAC, Control Element, CE, as a confirmation from the UE confirming reception of the sent SeNB configuration, and
- determining that the UE has taken the SeNB configuration into use.

13. A SeNB (2800, 2900) according to claim 12, configured for determining that the UE has taken the SeNB configuration into use by sending an indication to the UE to start applying the SeNB configuration.

## Patentansprüche

1. Verfahren (2300), das durch eine in einem drahtlosen Kommunikationssystem betriebsfähige Benutzereinrichtung, UE, durchgeführt wird, wobei das drahtlose Kommunikationssystem angepasst ist, um eine duale Konnektivität zwischen der UE und einem als Master entwickelten Knoten B, MeNB, und zwischen der UE und einem sekundären eNB, SeNB, bereitzustellen, wobei das Verfahren zur Modifizierung einer Funkressourcenkonfiguration des SeNB in Bezug auf die gegenwärtig mit dem MeNB verbundene UE durchgeführt wird, wobei das Verfahren Folgendes umfasst:
- Empfangen (2310), vom MeNB, einer SeNB-Funkressourcenkonfiguration für die Funkressource des SeNB in Bezug auf die UE,
- Senden (2320) einer Bestätigung an den SeNB, um die empfangene SeNB-Konfiguration zu bestätigen, und
- Anwenden (2340) der empfangenen SeNB-Konfiguration auf die Funkressourcenkonfiguration des SeNB,
**gekennzeichnet durch**
Senden (2320) der Bestätigung an den SeNB umfasst das Senden eines Steuerelements, CE, der Mediumzugriffssteuerung, MAC, an den SeNB.

2. Verfahren (2300) nach Anspruch 1, wobei das Anwenden (2340) der empfangenen SeNB-Konfiguration das Anwenden der empfangenen SeNB-Konfiguration für eine Übertragung umfasst, nachdem die Bestätigung gesendet wurde.

3. Verfahren (2300) nach Anspruch 1, wobei das Anwenden (140) der empfangenen SeNB-Konfiguration das Anwenden der empfangenen SeNB-Konfiguration nach einer vorbestimmten Zeitdauer, T, umfasst, nachdem die Bestätigung gesendet wurde.

4. Verfahren (2300) nach Anspruch 1, wobei das Anwenden (2340) der empfangenen SeNB-Konfiguration das Anwenden der empfangenen SeNB-Konfiguration nach einer vorbestimmten Anzahl, N, von Übertragungen umfasst, nachdem die Bestätigung durchgeführt wurde.

5. Verfahren (2300) nach Anspruch 1, wobei das Anwenden (2340) der empfangenen SeNB-Konfiguration das Anwenden der empfangenen SeNB-Konfiguration umfasst, nachdem eine Angabe vom SeNB empfangen wurde.

6. Verfahren (2300) nach einem der Ansprüche 1 bis 5, wobei die Bestätigung gemäß der empfangenen SeNB-Konfiguration oder einer alten existierenden SeNB-Konfiguration gesendet wird.

7. Verfahren (2300) nach einem der Ansprüche 2 bis 6, ferner umfassend das Empfangen (2315) einer Angabe vom MeNB oder vom SeNB darüber, welche Verfahrensweise die UE zum Anwenden der empfangenen SeNB-Konfiguration verwenden soll.

8. Verfahren (2400), das durch einen in einem drahtlosen Kommunikationssystem betriebsfähigen sekundär entwickelten Knoten B, SeNB, durchgeführt wird, wobei das drahtlose Kommunikationssystem eingerichtet ist, um eine duale Konnektivität zwischen einer Benutzereinrichtung, UE, und einem Master-eNB, MeNB, und zwischen der UE und dem SeNB bereitzustellen, wobei das Verfahren zum Modifizieren einer Funkressourcenkonfiguration des SeNB in Bezug auf die UE durchgeführt wird, die gegenwärtig mit dem MeNB verbunden ist, wobei das Verfahren Folgendes umfasst:
- Auswählen (2410) einer SeNB-Konfiguration für die Funkressource des SeNB in Bezug auf die UE,
- Senden (2420) der SeNB-Konfiguration an den MeNB, **gekennzeichnet durch:**
- Empfangen (2430) von der UE eines Steuerelements, CE, der Medienzugriffssteuerung, MAC, als eine Bestätigung von der UE, um den Empfang der gesendeten SeNB-Konfiguration zu bestätigen, und
- Bestimmen (2440), dass die UE die SeNB-Konfiguration in Gebrauch genommen hat.

9. Verfahren (2400) nach Anspruch 8, wobei das Bestimmen (2440), dass die UE die SeNB-Konfiguration in Gebrauch genommen hat, das Senden einer Angabe an die UE umfasst, um mit der Anwendung der SeNB-Konfiguration zu beginnen.

10. Verfahren (2400) nach einem der Ansprüche 8 bis 9, ferner umfassend das Benachrichtigen (2450) des MeNB über den erfolgreichen Abschluss der Modifizierung der Funkressourcenkonfiguration des SeNB.

11. In einem drahtlosen Kommunikationssystem betriebsfähige Benutzereinrichtung, UE, (2600, 2700), wobei das drahtlose Kommunikationssystem angepasst ist, um eine duale Konnektivität zwischen der UE und einem als Master entwickelten Knoten B, MeNB, und zwischen der UE und einem sekundären eNB, SeNB, bereitzustellen, wobei die UE zur Modifizierung einer Funkressourcenkonfiguration des SeNB in Bezug auf die UE konfiguriert ist, die gegenwärtig mit dem MeNB verbunden ist, wobei die UE konfiguriert ist zum:
- Empfangen, vom MeNB, einer SeNB-Funkressourcenkonfiguration für die Funkressource des SeNB in Bezug auf die UE, **gekennzeichnet durch:**
- Senden einer Bestätigung an den SeNB durch Senden eines Steuerelements, CE, der Mediumzugriffssteuerung, MAC, an den SeNB, um die empfangene SeNB-Konfiguration zu bestätigen, und
- Anwenden der empfangenen SeNB-Konfiguration für die Funkressourcenkonfiguration des SeNB.

12. In einem drahtlosen Kommunikationssystem betriebsfähiger sekundär entwickelter Knoten B, SeNB, (2800, 2900), wobei das drahtlose Kommunikationssystem angepasst ist, um eine duale Konnektivität zwischen einer Benutzereinrichtung, UE, und einem Master-eNB, MeNB, und zwischen der UE und dem SeNB bereitzustellen, wobei das Verfahren zum Modifizieren einer Funkressourcenkonfiguration des SeNB in Bezug auf die UE durchgeführt wird, die gegenwärtig mit dem MeNB verbunden ist, wobei der SeNB konfiguriert ist zum:
- Auswählen einer SeNB-Funkressourcenkonfiguration für die Funkressource des SeNB in Bezug auf die UE,
- Senden der SeNB-Konfiguration an den MeNB, **gekennzeichnet durch:**
- Empfangen von der UE eines Steuerelements, CE, der Medienzugriffssteuerung, MAC, als eine Bestätigung von der UE, um den Empfang der gesendeten SeNB-Konfiguration zu bestätigen, und
- Bestimmen, dass die UE die SeNB-Konfiguration in Gebrauch genommen hat.

13. SeNB (2800, 2900) nach Anspruch 12, der konfiguriert ist, um zu bestimmen, dass die UE die SeNB-Konfiguration in Gebrauch genommen hat, indem eine Angabe an die UE gesendet wird, um mit der Anwendung der SeNB-Konfiguration zu beginnen.

## Revendications

1. Procédé (2300) mis en oeuvre par un équipement utilisateur, UE, exploitable dans un système de communication sans fil, le système de communication sans fil étant conçu pour assurer une connectivité double entre l'UE et un noeud B évolué maître, MeNB, et entre l'UE et un noeud B évolué secondaire, SeNB, le procédé étant mis en oeuvre pour modifier une configuration de ressource radio du SeNB, par rapport à l'UE, actuellement connecté au MeNB, le procédé comprenant :
- la réception (2310), depuis le MeNB, d'une configuration de ressource radio SeNB pour la ressource radio du SeNB par rapport à l'UE,
- l'envoi (2320) d'une confirmation au SeNB, confirmant la configuration SeNB reçue, et
- l'application (2340) de la configuration SeNB reçue pour la configuration de ressource radio du SeNB,
**caractérisé par**
l'envoi (2320) de la confirmation au SeNB comprend l'envoi d'un élément de commande, CE, de commande d'accès au support, MAC, au SeNB.

2. Procédé (2300) selon la revendication 1, dans lequel l'application (2340) de la configuration SeNB reçue comprend l'application de la configuration SeNB reçue pour une transmission après que la confirmation a été envoyée.

3. Procédé (2300) selon la revendication 1, dans lequel l'application (140) de la configuration SeNB reçue comprend l'application de la configuration SeNB reçue après une période de temps prédéterminée, T, après que la confirmation a été envoyée.

4. Procédé (2300) selon la revendication 1, dans lequel l'application (2340) de la configuration SeNB reçue comprend l'application de la configuration SeNB reçue après un nombre prédéterminé, N, de transmissions après que la confirmation a été mise en oeuvre.

5. Procédé (2300) selon la revendication 1, dans lequel l'application (2340) de la configuration SeNB reçue comprend l'application de la configuration SeNB reçue après qu'une indication a été reçue du SeNB.

6. Procédé (2300) selon l'une quelconque des revendications 1 à 5, dans lequel la confirmation est envoyée selon la configuration SeNB reçue ou selon une ancienne configuration SeNB existante.

7. Procédé (2300) selon l'une quelconque des revendications 2 à 6, comprenant en outre la réception (2315) d'une indication depuis le MeNB ou le SeNB concernant quelle procédure l'UE utilisera pour appliquer la configuration SeNB reçue.

8. Procédé (2400) mis en oeuvre par un noeud B évolué secondaire, SeNB, exploitable dans un système de communication sans fil, le système de communication sans fil étant conçu pour assurer une connectivité double entre un équipement utilisateur, UE, et un noeud B évolué maître, MeNB, et entre l'UE et le SeNB, le procédé étant mis en oeuvre pour modifier une configuration de ressource radio du SeNB par rapport à l'UE, actuellement connecté au MeNB, le procédé comprenant :
- la sélection (2410) d'une configuration SeNB pour la ressource radio du SeNB par rapport à l'UE,
- l'envoi (2420) de la configuration SeNB au MeNB, **caractérisé par** :
- la réception (2430) depuis l'UE d'un élément de commande, CE, de commande d'accès au support, MAC, en tant que confirmation provenant de l'UE confirmant la réception de la configuration SeNB envoyée, et
- la détermination (2440) que l'UE a mis la configuration SeNB en oeuvre.

9. Procédé (2400) selon la revendication 8, dans lequel la détermination (2440) que l'UE a mis la configuration SeNB en oeuvre comprend l'envoi d'une indication à l'UE pour démarrer l'application de la configuration SeNB.

10. Procédé (2400) selon l'une quelconque des revendications 8 à 9, comprenant en outre la notification (2450) du MeNB de l'achèvement réussi de la modification de la configuration de ressource radio du SeNB.

11. Équipement utilisateur, UE, (2600, 2700) exploitable dans un système de communication sans fil, le système de communication sans fil étant conçu pour assurer une connectivité double entre l'UE et un noeud B évolué maître, MeNB, et entre l'UE et un noeud B évolué secondaire, SeNB, l'UE étant configuré pour modifier une configuration de ressource radio du SeNB, par rapport à l'UE, actuellement connecté au MeNB, l'UE étant configuré pour :
- recevoir, depuis le MeNB, une configuration de ressource radio SeNB pour la ressource radio du SeNB par rapport à l'UE, **caractérisé par** :
- l'envoi d'une confirmation au SeNB en envoyant un élément de commande, CE, de commande d'accès au support, MAC, au SeNB confirmant la configuration SeNB reçue, et
- l'application de la configuration SeNB reçue pour la configuration de ressource radio du SeNB.

12. Noeud B évolué secondaire, SeNB, (2800, 2900) exploitable dans un système de communication sans fil, le système de communication sans fil étant conçu pour assurer une connectivité double entre un équipement utilisateur, UE, et un eNB maître, MeNB, et entre l'UE et le SeNB, le procédé étant mis en oeuvre pour modifier une configuration de ressource radio du SeNB par rapport à l'UE, actuellement connecté au MeNB, le SeNB étant configuré pour :
- sélectionner une configuration de ressource radio SeNB pour la ressource radio du SeNB par rapport à l'UE,
- envoyer la configuration SeNB au MeNB, **caractérisé par** :
- la réception depuis l'UE d'un élément de commande, CE, de commande d'accès au support, MAC, en tant que confirmation provenant de l'UE confirmant la réception de la configuration SeNB envoyée, et
- la détermination que l'UE a mis la configuration SeNB en oeuvre.

13. SeNB (2800, 2900) selon la revendication 12, configuré pour déterminer que l'UE a mis la configuration SeNB en oeuvre en envoyant une indication à l'UE pour démarrer l'application de la configuration SeNB.
